(19) Europäisches Patentamt
European Patent Office
Office européen des brevets

(11) EP 3 421 259 B1

(12) EUROPEAN PATENT SPECIFICATION

(45) Date of publication and mention of the grant of the patent:
**28.10.2020 Bulletin 2020/44**

(21) Application number: **17756507.4**

(22) Date of filing: **21.02.2017**

(51) Int Cl.:
***B60C 1/00*** (2006.01) ***B60C 5/01*** (2006.01)
***C08G 69/40*** (2006.01) ***C08G 69/44*** (2006.01)

(86) International application number:
**PCT/JP2017/006441**

(87) International publication number:
**WO 2017/146069 (31.08.2017 Gazette 2017/35)**

# (54) TIRE

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2016 JP 2016030949**

(43) Date of publication of application:
**02.01.2019 Bulletin 2019/01**

(73) Proprietor: **Bridgestone Corporation**
**Tokyo 104-8340 (JP)**

(72) Inventors:
- **ITOH, Yuki**
  **Tokyo 104-8340 (JP)**
- **KAWADA, Midori**
  **Tokyo 104-8340 (JP)**
- **MIYANO, Mari**
  **Tokyo 104-8340 (JP)**

(74) Representative: **Oxley, Robin John George**
**Marks & Clerk LLP**
**15 Fetter Lane**
**London EC4A 1BW (GB)**

(56) References cited:
**EP-A1- 2 610 071**
**WO-A1-01/17800**
**WO-A1-2014/157558**
**WO-A1-2014/157559**
**WO-A1-2016/052564**
**JP-A- 2009 107 183**
**JP-A- 2012 045 790**
**JP-A- 2012 045 790**
**JP-A- 2014 198 518**
**JP-A- 2014 198 779**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 421 259 B1

**Description**

Technical Field

The present invention relates to a tire configured to be mountable on a rim, and relates, for example, to a tire including a rubber member and a tire frame in which at least a part of the tire frame is made of a resin material.

Related Art

Pneumatic tires made of a rubber, an organic fiber material or a steel member have been used in vehicles such as passenger cars. From the viewpoints of reducing weight and increasing moldability and recyclability, studies have been recently conducted with respect to use of a resin material containing a polymer compound such as a thermoplastic resin or a thermoplastic elastomer, as a raw material of tires.

Thermoplastic polymer materials (such as thermoplastic elastomers and thermoplastic resins) have many properties that are favorable from the viewpoint of improving productivity, for example, injection moldability. For example, a tire produced using a thermoplastic elastomer as the thermoplastic polymer material has been proposed (see Patent Document 1)). A tire having a circular frame formed of a thermoplastic resin material including at least a polyester based thermoplastic elastomer having a deflection temperature being from 50 to 130 °C, wherein said tire is characterized by an improved durability and an improved impact resistance, is described in EP2610071 A1.

[Prior Art Document]

[Patent Document]

[Patent Document 1] Japanese Patent Application Laid-open (JP-A) No. 2012-45790

SUMMARY

When a tire includes a rubber member, it is desired to perform vulcanization at high temperature within a short time, from the viewpoint of improving the productivity of the tire. However, when a tire having a tire frame made of a conventional resin is subjected to vulcanization at high temperature, the resin material melts and makes it difficult to maintain the tire shape in some cases.

A resin material that tolerates vulcanization at high temperature may be obtained, for example, by increasing the melting point of the resin material. In particular, when the resin material includes a thermoplastic elastomer, the proportion of hard segment in the thermoplastic elastomer may be increased, or the melting point of the hard segment may be increased in order to obtain a resin material that tolerates vulcanization at high temperature.

However, increasing the proportion of hard segment in the thermoplastic elastomer or increasing the melting point of the hard segment leads to an increased elastic modulus of the resin material that includes the thermoplastic elastomer. A tire produced using such a resin material may provide inferior ride quality due to increased hardness of the tire.

In consideration of the above circumstances, an object of the present invention is to provide a tire capable of high-temperature short-time vulcanization and providing an excellent ride quality.

Specific means for solving the object include the following aspect:

[1] A tire including a rubber member and a round tire frame made of a resin material including a thermoplastic elastomer, the resin material having a deflection temperature under load of 150 °C or higher, the thermoplastic elastomer including a soft segment and a hard segment derived from a polyamide, the minimum number X of carbon atoms present between nitrogen atoms in the main chain of the polyamide in the hard segment and the number average molecular weight Y of the hard segment satisfying the following Formulae 1 to 3.

$$\text{Formula 1:} \qquad Y = 250X + A$$

$$\text{Formula 2:} \qquad 6 \leq X \leq 12$$

$$\text{Formula 3:} \qquad -1000 \leq A \leq 1500$$

According to the invention, a tire capable of high-temperature short-time vulcanization and providing an excellent ride quality is provided.

BRIEF DESCRIPTION OF DRAWINGS

Fig. 1A is a perspective view illustrating a cross-section of a part of a tire according to one embodiment, and Fig. 1B is a cross-sectional view of a bead portion of the tire mounted on a rim illustrated in Fig. 1A.
Fig. 2 is a cross-sectional view taken along the tire rotation axis, which illustrates a state in which the reinforcing cord is embedded in the crown portion of the tire case of a tire according to one embodiment.
Fig. 3 is a perspective view illustrating a cross-section of a part of a tire according to another embodiment.
Fig. 4 is an explanatory diagram explaining an operation to embed the reinforcing cord in the crown portion of a tire case using a cord heating device and rollers

DETAILED DESCRIPTION

Specific embodiments in the invention are described below in detail. However, the following embodiments are not limiting, and various modifications or alterations may suitably be made within the object of the invention.
The scope of the term "resin" as used herein encompasses thermoplastic resins (including thermoplastic elastomers) and thermosetting resins, but does not include vulcanized rubbers. The term "rubber" as used herein refers to an elastic polymer compound, but is distinguished from thermoplastic elastomers in the present specification.
The term "thermoplastic elastomer" as used herein refers to an elastic polymer compound that is a copolymer of a polymer forming a hard segment and a polymer forming a soft segment, the hard segment having a crystalline property and a high melting point or having high a cohesive force, and the soft segment having an amorphous property and a low glass transition temperature.
In the present specification, each numerical range specified using "to" represents a range including the numerical values indicated before and after "to" as the minimum value and the maximum value, respectively.
Further, the scope of the term "process" includes not only an independent process, but also a process that cannot be clearly distinguished from another process, but still achieves the specified purpose of the process.
Still further, the ride quality is calculated from evaluated based on the maximum displacement in the tire radial direction (vertical spring rate) measured when a tire mounted on a standard rim (7JJ) designated in JATMA YEAR BOOK published by Japan Automobile Tyre Manufacturers Association (JATMA) is placed on a flat plate with a pneumatic pressure of 230 kPa and a tire load of 4165N. In the invention, a greater value indicates higher ride quality.

<Tire>

The tire according to the invention includes (i) a round tire frame made of a resin material including a thermoplastic elastomer and (ii) a rubber member, the resin material having a deflection temperature under load of 150 °C or higher, the thermoplastic elastomer including a soft segment and a hard segment derived from a polyamide, the minimum number X of carbon atoms present between nitrogen atoms in the main chain of the polyamide in the hard segment and the number average molecular weight Y of the hard segment satisfying the following Formulae 1 to 3.

$$\text{Formula 1:} \qquad Y = 250X + A$$

$$\text{Formula 2:} \qquad 6 \leq X \leq 12$$

$$\text{Formula 3:} \qquad -1000 \leq A \leq 1500$$

Hereinafter, the above-described thermoplastic elastomer is also referred to as the "specific thermoplastic elastomer", and the above hard segment is also referred to as the "specific hard segment".

It is conceivable that the tire according to the invention is capable of high-temperature short-period vulcanization and provides excellent ride quality due to adoption of the configuration in which, in a tire including a rubber member and a round tire frame made of a resin material including the specific thermoplastic elastomer, the deflection temperature under load of the resin material is 150 °C or higher and the hard segment of the specific thermoplastic elastomer is the specific hard segment.

More specifically, it is conceivable that, by setting the molecular weight of the hard segment to be within a specific range determined in relation to the minimum number of carbon atoms present between nitrogen atoms contained in the main chain of the polyamide, which is the hard segment of the specific thermoplastic elastomer, it is made possible to increase the melting point while reducing an increase in elastic modulus of the specific thermoplastic elastomer. It is conceivable that the above is the reason why the tire in which the resin material including the specific thermoplastic elastomer does not become too hard, and provides excellent ride quality. Further, it is conceivable that setting the deflection temperature under load of the resin material to be 150 °C or higher enables high-temperature short-period vulcanization while maintaining the tire shape.

<Tire Frame>

The tire according to the invention includes a round tire frame made of a resin material including the specific thermoplastic elastomer. By using a resin material including the specific thermoplastic elastomer as a material for forming a tire frame, tire performance comparable to conventional rubber tires can be achieved, and a tire production efficiency higher than that in the production of conventional rubber tires can be achieved.

[Resin Material]

The resin material includes at least one of the specific thermoplastic elastomer, and has a deflection temperature under load of 150 °C or higher. Since the resin material has a deflection temperature under load of 150 °C or higher, the shape of the tire frame can be maintained even when high-temperature short-period vulcanization is carried out. The deflection temperature under load is a value as measured in accordance with Japanese Industrial Standards (JIS) K7191-2:2007 or ASTM D648.

From the same viewpoint as that described above, the deflection temperature under load of the resin material is preferably 165 °C or higher, and more preferably 175 °C or higher. The upper limit of the deflection temperature under load is not particularly limited, but may be 230 °C or lower from the viewpoint of moldability.

(Specific Thermoplastic Elastomer)

The resin material includes at least one thermoplastic elastomer that satisfies the definition of the specific thermoplastic elastomer defined above. Due to the inclusion of the specific thermoplastic elastomer in the resin material, the tire provides excellent ride quality and the deformation of the tire frame can be reduced even when the tire frame is subjected to high-temperature short-period vulcanization.

The specific thermoplastic elastomer includes a soft segment and the specific hard segment. Due to the inclusion of the specific hard segment in the specific thermoplastic elastomer, the tire is not too hard, and provides excellent ride quality.

The structure of the specific thermoplastic elastomer may be a structure in which the hard segment includes the specific hard segment and in which another polymer (for example, a polyester or a polyether) forms a soft segment that is amorphous and has a low glass transition temperature. The specific thermoplastic elastomer may include a structure derived from a chain extending agent such as a dicarboxylic acid, in addition to the specific hard segment and the soft segment. Here, the expression "derived from a chain etending agent" means that, as a result of reaction of functional groups of the chain extending agent with other molecules, the chain extending agent is bonded to the other molecules, so that the other portion of the chain extending agent than the above functional groups forms a portion of the molecule (the specific thermoplastic elastomer) after the bonding.

-Specific Hard Segment-

The hard segment (specific hard segment) in the specific thermoplastic elastomer is derived from a polyamide, and the minimum number X of carbon atoms present between nitrogen atoms in the main chain of the polyamide in the hard segment and the number average molecular weight Y of the hard segment satisfy the following Formulae 1 to 3.

Here, the expression "derived from a polyamide" means that, as a result of reaction of functional groups of the polyamide with other molecules, the polyamide is bonded to the other molecules, so that the other portion of the polyamide than the above functional groups forms a portion of the molecule (the specific thermoplastic elastomer) after the bonding.

Therefore, the hard segment can be expressed as a polymer that includes an amide structure.

$$\text{Formula 1:} \quad Y = 250X + A$$

$$\text{Formula 2:} \quad 6 \leq X \leq 12$$

$$\text{Formula 3:} \quad -1000 \leq A \leq 1500$$

Formula 1 is an equation representing the relationship between the number average molecular weight Y of the hard segment, the minimum number X of carbon atoms present between nitrogen atoms in the main chain of the polyamide, and the intercept A. Formula 2 is an inequality indicating the range for X in Formula 1. Formula 3 is an inequality indicating the range for A in Formula 1.

The number of carbon atoms present between nitrogen atoms in the main chain of the polyamide can be determined by analyzing the molecular structure using nuclear magnetic resonance (NMR).

When the hard segment in the specific thermoplastic elastomer satisfies the above Formulae 1 to 3, the melting point of the specific thermoplastic elastomer increases while an increase in elastic modulus of the specific thermoplastic elastomer is reduced. Thus the tire frame including the specific thermoplastic elastomer is capable of high-temperature short-period vulcanization, and the tire including the tire frame provides excellent ride quality.

In the hard segment in the specific thermoplastic elastomer, A as defined in Formula 1 preferably satisfies the following Formula 4, and more preferably satisfies the following Formula 5, from the same viewpoint as that described above.

$$\text{Formula 4: } -750 \leq A \leq 1250$$

$$\text{Formula 5: } -500 \leq A \leq 1000$$

-Molecular Weight of Specific Hard Segment-

The number average molecular weight of the specific hard segment varies with the minimum number of carbon atoms present between nitrogen atoms in the main chain of the polyamide, as described above. For example, when the minimum number of carbon atoms present between nitrogen atoms in the main chain of the polyamide is 6, the number average molecular weight of the specific hard segment is preferably from 500 to 3000, more preferably from 750 to 2750, and still more preferably from 1000 to 2500. Alternatively, when the minimum number of carbon atoms present between nitrogen atoms in the main chain of the polyamide is 12, the number average molecular weight of the specific hard segment is preferably from 2000 to 4500, more preferably from 2250 to 4250, and still more preferably from 2500 to 4000.

Here, a number average molecular weight as measured by gel permeation chromatography (GPC) is taken as the molecular weight. The measurement instrument is, for example, HLC-8320GPC ECOSEC manufactured by Tosoh Corporation or another gel permeation chromatography (GPC) instrument.

The polyamide for forming the specific hard segment is, for example, a polyamide formed from a monomer represented by the following Formula (1) or Formula (2).

Formula (1): $H_2N\text{-}R^1\text{-}COOH$

In Formula (1), $R^1$ represents a hydrocarbon molecular chain having from 2 to 20 carbon atoms (for example, an alkylene group having from 2 to 20 carbon atoms).

Formula (2)

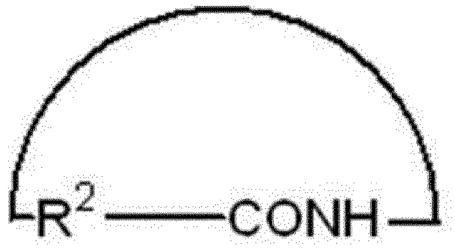

In Formula (2), $R^2$ represents a hydrocarbon molecular chain having from 3 to 20 carbon atoms (for example, an alkylene group having from 3 to 20 carbon atoms).

In Formula (1), $R^1$ is preferably a hydrocarbon molecular chain having from 3 to 18 carbon atoms (for example, an alkylene group having from 3 to 18 carbon atoms), more preferably a hydrocarbon molecular chain having from 4 to 15 carbon atoms (for example, an alkylene group having from 4 to 15 carbon atoms), and still more preferably a hydrocarbon molecular chain having from 10 to 15 carbon atoms (for example, an alkylene group having from 10 to 15 carbon atoms). In Formula (2), $R^2$ is preferably a hydrocarbon molecular chain having from 3 to 18 carbon atoms (for example, an alkylene group having from 3 to 18 carbon atoms), a hydrocarbon molecular chain having from 4 to 15 carbon atoms (for example, an alkylene group having from 4 to 15 carbon atoms), and still more preferably a hydrocarbon molecular chain having from 10 to 15 carbon atoms (for example, an alkylene group having from 10 to 15 carbon atoms).

Examples of monomers represented by the above Formula (1) or Formula (2) include an ω-aminocarboxylic acid, and a lactam. Examples of the polyamide that forms the specific hard segment include a polycondensate of an ω-aminocarboxylic acid, a polycondensate of a lactam, and a *co*-polycondensate of a diamine and a dicarboxylic acid.

Examples of the ω-aminocarboxylic acid include aliphatic ω-aminocarboxylic acids having from 5 to 20 carbon atoms, such as 6-aminocaproic acid, 7-aminoheptanoic acid, 8-aminooctanoic acid, 10-aminocapric acid, 11-aminoundecanoic acid, and 12-aminododecanoic acid. Examples of the lactam include aliphatic lactams having from 5 to 20 carbon atoms, such as lauryllactam, ε-caprolactam, undecanelactam, ω-enantholactam, and 2-pyrrolidone.

Examples of the diamine include aliphatic diamines having from 2 to 20 carbon atoms, such as ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, 3-methylpentamethylenediamine and metaxylenediamine. The dicarboxylic acid may be represented by HOOC-$(R^3)$m-COOH, wherein $R^3$ represents a hydrocarbon having from 3 to 20 carbon atoms, and m represents 0 or 1. Examples of the dicarboxylic acid include aliphatic dicarboxylic acids having from 2 to 20 carbon atoms, such as oxalic acid, succinic acid, glutaric acid, adipic acid, pimelic acid, suberic acid, azelaic acid, sebacic acid, and dodecanedioic acid. The polyamide that forms the specific hard segment is preferably a polyamide obtained by ring-opening polycondensation of lauryllactam, ε-caprolactam or undecanelactam.

Examples of the polyamide include a polyamide (PA6) obtained by ring-opening polycondensation of ε-caprolactam, a polyamide (PA10) obtained by ring-opening polycondensation of decanelactam, a polyamide (PA11) obtained by ring-opening polycondensation of undecanelactam, a polyamide (PA12) obtained by ring-opening polycondensation of lauryllactam, a polyamide (PA12) obtained by polycondensation of 12-aminododecanoic acid, a polycondensate polyamide (PA66) of a diamine and a dibasic acid, and a polyamide (PA610), which is a copolymer of PA6 and PA10. It is preferable to use one or more of PA6, PA12 or PA11 as the hard segment in consideration of, for example, easy availability and properties desired in the invention.

PA6 can be expressed as, for example, $\{CO-(CH_2)_5-NH\}_n$, wherein n represents the number of repeating units, which may be freely set. Here, n is preferably from 2 to 100, and more preferably from 3 to 50. The minimum number X of carbon atoms present between nitrogen atoms in the polyamide main chain of PA6 is 6.

PA11 can be expressed as, for example, $\{CO-(CH_2)_{10}-NH\}_n$, wherein n represents the number of repeating units, which may be freely set. Here, n is preferably from 2 to 100, and more preferably from 3 to 50. The minimum number X of carbon atoms present between nitrogen atoms in the polyamide main chain of PA11 is 11.

PA12 can be expressed as, for example, $\{CO-(CH_2)_{11}-NH\}_n$, wherein n represents the number of repeating units, which may be freely set. Here, n is preferably from 2 to 100, and more preferably from 3 to 50. The minimum number X of carbon atoms present between nitrogen atoms in the polyamide main chain of PA12 is 12.

PA66 can be expressed as, for example, $\{CO(CH_2)_4CONH(CH_2)_6NH\}_n$, wherein n represents the number of repeating units, which may be freely set. Here, n is preferably from 2 to 100, and more preferably from 3 to 50. The minimum number X of carbon atoms present between nitrogen atoms in the polyamide main chain of PA66 is 6.

PA610 can be expressed as, for example, $\{CO(CH_2)_8CONH(CH_2)_6NH\}_n$, wherein n represents the number of repeating units, which may be freely set. Here, n is preferably from 2 to 100, and more preferably from 3 to 50. The minimum number X of carbon atoms present between nitrogen atoms in the polyamide main chain of PA610 is 6.

The content of the specific hard segment in the specific thermoplastic elastomer is preferably 5% by mass to

95% by mass, more preferably from 10% by mass to 90% by mass, and still more preferably from 15% by mass to 90% by mass, with respect to the total amount of the specific thermoplastic elastomer.

-Soft Segment-

The soft segment in the thermoplastic elastomer is not particularly limited. Examples of the polymer for forming the soft segment include polyesters and polyethers, more specifically polyethylene glycol (PEG), polypropylene glycol (PPG), polytetramethylene ether glycol (PTMG), and ABA-type triblock polyethers. Here, the "ABA-type triblock polyether" refers to a polyether represented by the following Formula (3).

Formula (3)

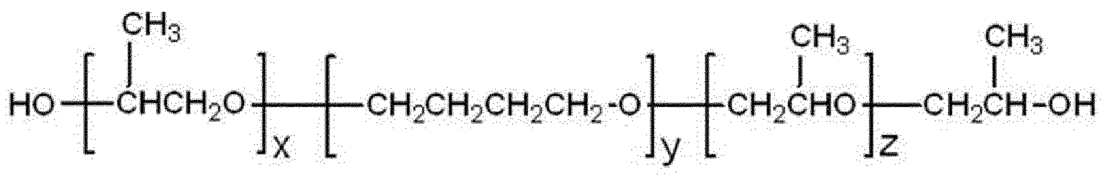

In Formula (3), each of x and z independently represents an integer from 1 to 20, and y represents an integer from 4 to 50.

In Formula (3), each of x and z is preferably an integer from 1 to 18, more preferably an integer from 1 to 16, still more preferably an integer from 1 to 14, and further more preferably an integer from 1 to 12. In Formula (3), y is preferably an integer from 5 to 45, more preferably an integer from 6 to 40, still more preferably an integer from 7 to 35, and further more preferably an integer from 8 to 30.

The combination of the specific hard segment and the soft segment is, for example, a combination of any of the above examples of the specific hard segment and any of the above examples of the soft segment. The combination of the specific hard segment and the soft segment is preferably a combination of a ring-opening polycondensate of ε-caprolactam and polyethylene glycol, a combination of a ring-opening polycondensate of ε-caprolactam and polypropylene glycol, a combination of a ring-opening polycondensate of ε-caprolactam and polytetramethylene ether glycol, or a combination of a ring-opening polycondensate of ε-caprolactam and an ABA-type triblock polyether, and is more preferably a combination of a ring-opening polycondensate of ε-caprolactam and an ABA-type triblock polyether. The combination of the specific hard segment and the soft segment is also preferably a combination of a ring-opening polycondensate of lauryllactam and polyethylene glycol, a combination of a ring-opening polycondensate of lauryllactam and polypropylene glycol, a combination of a ring-opening polycondensate of lauryllactam and polytetramethylene ether glycol, or a combination of a ring-opening polycondensate of lauryllactam and an ABA-type triblock polyether, and more preferably a combination of a ring-opening polycondensate of lauryllactam and an ABA-type triblock polyether.

When polypropylene glycol is used as the soft segment, a functional group present at a terminal of the polypropylene glycol derivative is preferably a functional group that reacts with a carboxy group of a dicarboxylic acid serving as a chain elongating agent to bind the polypropylene glycol and the dicarboxylic acid. The functional group is, for example, an amino group. The polypropyleneglycol derivative is, for example, a polyoxypropylene diamine, which can be obtained by allowing ammonia or the like to react with terminals of polypropylene glycol having hydroxyl groups at both terminals. Hereinafter, the polypropylene glycol having hydroxyl groups at both terminals and the polypropylene glycol derivative are collectively referred to as "polypropylene glycol" in some cases.

Polypropylene glycol can be produced using known methods. Specifically, polypropylene glycol can be obtained by, for example, allowing propylene oxide to undergo anionic ring-opening polymerization reaction. Alternatively, the soft segment may be formed using a commercially available polypropylene glycol.

--Molecular Weight of Soft Segment--

The number average molecular weight of the soft segment is preferably from 500 to 12,000, more preferably from 650 to 6000, and still more preferably from 1000 to 2000. When the number average molecular weight of the soft segment is 500 or more, an increase in the elastic modulus of the specific thermoplastic elastomer can be reduced. When the number average molecular weight of the soft segment is 12,000 or less, the moldability of the specific thermoplastic elastomer is further increased.

Here, a number average molecular weight as measured by gel permeation chromatography (GPC) is taken as the molecular weight. The measurement instrument is, for example, HLC-8320GPC ECOSEC manufactured by Tosoh

Corporation or another GPC instrument.

The ratio of the number average molecular weight of the specific hard segment to the number average molecular weight of the soft segment is not particularly limited. The ratio of the number average molecular weight of the specific hard segment to the number average molecular weight of the soft segment is preferably in the range of from 45/55 to 90/10, more preferably in the range of from 60/40 to 80/20, and still more preferably in the range of from 60/40 to 75/25. When the ratio of the number average molecular weight of the specific hard segment to the number average molecular weight of the soft segment is not higher than the above upper limit, the moldability of the thermoplastic elastomer is further improved. When the ratio of the number average molecular weight of the specific hard segment to the number average molecular weight of the soft segment is not lower than the above lower limit, the melting point of the specific thermoplastic elastomer increases while an increase in the elastic modulus of the specific thermoplastic elastomer is reduced.

The content of the soft segment in the specific thermoplastic elastomer is preferably from 10% by mass to 95% by mass, more preferably from 10% by mass to 90% by mass, with respect to the total amount of the thermoplastic elastomer.

-Chain Extending Agent-

The chain extending agent is preferably a dicarboxylic acid having from 6 to 20 carbon atoms, examples of which include aliphatic dicarboxylic acids, alicyclic dicarboxylic acids and aromatic dicarboxylic acids. The chain extending agent may be used singly, or in combination of two or more thereof. The chain extending agent is preferably an aliphatic dicarboxylic acid, more preferably a linear aliphatic dicarboxylic acid, still more preferably a linear aliphatic dicarboxylic acid having from 8 to 20 carbon atoms, and further more preferably a linear aliphatic dicarboxylic acid having from 10 to 18 carbon atoms.

Examples of the dicarboxylic acid include: linear aliphatic dicarboxylic acids having from 6 to 20 carbon atoms, such as adipic acid (hexanedioic acid), 1,10-decane dicarboxylic acid (dodecanedioic acid), pimelic acid (heptanedioic acid), suberic acid (octanedioic acid), azelaic acid (nonanedioic acid), sebacic acid (decanedioic acid), and eicosanedioic acid; aliphatic dicarboxylic acids, such as dimerized aliphatic dicarboxylic acids having from 14 to 20 carbon atoms that are dimerized unsaturated fatty acids obtained by fractional distillation of a triglyceride, and hydrogenated products of the dimerized aliphatic dicarboxylic acids; alicyclic dicarboxylic acids having from 6 to 20 carbon atoms, such as 1,4-cyclohexane dicarboxylic acid; and aromatic dicarboxylic acids having from 6 to 20 carbon atoms, such as terephthalic acid and isophthalic acid. Among them, adipic acid, dodecanedioic acid and eicosanedioic acid are preferable.

When the specific thermoplastic elastomer includes a chain extending agent, the content of the chain extending agent is preferably set such that the terminal functional groups (for example, hydroxyl groups and/or amino groups) in the molecules of the compound that forms the soft segment are equimolar to the carboxyl groups in the molecules of the chain extending agent.

The content of the specific thermoplastic elastomer in the resin material is preferably 50% by mass or more, more preferably from 55% by mass to 100% by mass, and still more preferably from 60% by mass to 100% by mass, with respect to the total mass of the resin material.

-Synthesis of Specific Thermoplastic Elastomer-

The specific thermoplastic elastomer can be synthesized by copolymerizing a polymer forming the specific hard segment and a polymer forming the soft segment using known methods. The specific hard segment, which satisfies the above Formulae (1) to (3), can be formed by the selection of the material and the adjustment of the reaction temperature, the reaction time and the like, and the specific thermoplastic elastomer can be obtained by copolymerizing the specific hard segment and the soft segment.

When another thermoplastic elastomer (y) is used together with the specific thermoplastic elastomer (x) in the resin material, the ratio by mass between the specific thermoplastic elastomer and another thermoplastic elastomer (x : y) may be freely set, and is preferably in the range of from 95:5 to 55:45, for example. When the mass ratio between the elastomers is within the above range, the specific thermoplastic elastomer and another thermoplastic elastomer forms a sea-island structure in which the specific thermoplastic elastomer serves as the sea, whereby the durability and impact resistance of the tire are improved. When two or more other thermoplastic elastomers are used, it is preferable that the ratio between the total amount of the specific thermoplastic elastomer and the total amount of the other thermoplastic elastomers is within the above range.

The melting point of the specific thermoplastic elastomer is preferably from 160 °C to 250 °C, and more preferably from 170 °C to 250 °C, from the viewpoint of reducing the deformation during high-temperature short-period vulcanization. When the resin material includes the specific thermoplastic elastomer and the specific thermoplastic elastomer has a melting point of from 160 °C to 250 °C, the deformation of the tire frame made of the resin material is reduced when

vulcanization is carried out at high temperature for a short time, and the shape of the tire frame can be maintained.

As described above, one or more other thermoplastic elastomers may be used together with the specific thermoplastic elastomer in the resin material, as long as the effects according to the invention are not impaired. In the other thermoplastic elastomers, examples of a polymer for forming a hard segment include a polyurethane having a urethane skeleton in the main chain and obtained by polymerizing a monomer having a urethane structure, a polystyrene having a styrene skeleton in the main chain and obtained by polymerizing a monomer having a styrene structure, and a polyolefin having an olefin skeleton in the main chain and obtained by polymerizing a monomer having an olefin structure. Examples of the other thermoplastic elastomers include polyurethane-based thermoplastic elastomers (TPU), polystyrene-based thermoplastic elastomers (TPS), polyolefin-based thermoplastic elastomers (TPO), and polyester-based thermoplastic elastomers (TPC), which are defined in JIS K6418.

Commercially available products, for example, may be used as the other thermoplastic elastomers. Examples of polyurethane-based thermoplastic elastomers include ELASTOLLAN series products (for example, ET680, ET880, ET690, ET890, C80A and S80A) manufactured by BASF, which are commercially available. Examples of polystyrene-based thermoplastic elastomers include TUFTEC series products (for example, H1031, H1041, H1043, H1051, H1052, H1053, H1082, H1141, H1221 and H1272) manufactured by Asahi Kasei Corporation, which are commercially available. Examples of polyolefin-based thermoplastic elastomers include TAFMER series products (for example, A0550S, A1050S, A4050S, A1070S, A4070S, A35070S, A1085S, A4085S, A7090, A70090, MH7007, MH7010 and P275) manufactured by Mitsui Chemicals Inc., which are commercially available. Examples of polyester-based thermoplastic elastomers include HYTREL series products (for example, 3046, 5557, 6347, 4047 and 4767) manufactured by Du-Pont Toray Co., Ltd., PELPRENE series products (for example, P30B, P40B, P40H, P55B, P70B, P150B, P280B, P450B, P150M, S1001, S2001, S5001, S6001 and S9001) manufactured by TOYOBO Co., Ltd., and PRIMALLOY A series products (for examples, A1500N, A1600N, A1700N, A1800N and A1900N) manufactured by Mitsubishi Chemical Corporation, which are commercially available.

The temperature at the melting peak as measured according to the method designated in JIS K7121:2012 using differential scanning calorimeter (DSC) at a temperature elevation rate of 10 °C / minute is taken as the melting point.

(Other Components)

Various additives may be included in the resin material, as desired, such as rubber, thermoplastic resins, various fillers (for example, silica, calcium carbonate, or clay), anti-aging agents, oils, plasticizers, colorants, and weather resistance agents.

-Physical Properties of Resin Material-

The tensile modulus of elasticity of the resin material as defined in JIS K7113:1995 (in the present specification, the term "modulus of elasticity" or "elastic modulus" hereinafter refers to tensile modulus of elasticity, unless otherwise specified) is preferably from 100 MPa to 1000 MPa, more preferably from 100 MPa to 800 MPa, and still more preferably from 100 MPa to 700 MPa. When the tensile modulus of elasticity of the resin material is from 100 MPa to 1000 MPa, the tire can efficiently be mounted on a rim while maintaining the shape of the tire frame.

The tensile strength at yield of the resin material as defined in JIS K7113:1995 is preferably 5 MPa or more, more preferably from 5 MPa to 20 MPa, and still more preferably from 5 MPa to 17 MPa. When the tensile strength at yield of the resin material is 5 MPa or more, the tire can endure the deformation due to a load applied to the tire at running.

The tensile elongation at yield of the resin material as defined in JIS K7113:1995 is preferably 10% or more, more preferably from 10% to 70%, and still more preferably from 15% to 60%. When the tensile elongation at yield of the resin material is 10% or more, the elastic range is large, and the fittability to a rim can be improved.

The tensile elongation at break of the resin material as defined in JIS K7113:1995 is preferably 50% or more, preferably 100% or more, still more preferably 150% or more, and further more preferably 200% or more. When the tensile elongation at break of the resin material is 50% or more, the fittability to a rim is excellent, and the tire is resistant to breakage upon impact.

-Formation of Tire Frame~

The method used for forming the tire frame is not particular limited. The tire frame may be formed in a manner in which the tire frame shape is formed in one step, or in a manner in which two or more tire frame pieces, each of which will form a respective part of the tire frame, are separately prepared and then joined together to form the tire frame.

Each tire frame piece may be a resin molded body obtained by, for example, integrally shaping a bead portion, a side portion and a half-width crown portion by, for example, injection molding. Usually, tire frame pieces are shaped as annular tire case half parts having the same shape, and two tire frame pieces are disposed to face each other and

joined together at the tire equatorial plane portion, thereby forming a tire frame. The tire frame may be formed by joining three or more pieces, if desired.

The tire frame pieces made of a resin material may be shaped using an appropriate mold and a known resin molding method such as vacuum forming, pressure forming, injection molding or melt casting. When the method in which two tire frame pieces having the same shape are joined together to form a tire frame, there is an advantage in that only one type of mold is required for forming the tire frame pieces.

One example of the method of producing a tire frame piece is described below. The tire frame piece may be formed using a mold having a fan gate, usually by injection molding. With respect to the heating temperature for forming the tire frame piece, the forming of the tire frame piece may be carried out at a temperature that is equal to or higher than the melting point of the resin material. For example, when the melting point of the specific thermoplastic elastomer is a temperature of from 160 °C to 250 °C, the forming of the tire frame piece may be carried out at a temperature that is in the range of from 160 °C to 290 °C and is equal to or higher than the melting point of the specific thermoplastic elastomer.

The forming of the tire frame piece is preferably carried out using a granular (pellet-shaped), powdery (flake-shaped) or micropowdery (powder-state) resin material as a starting material, and the starting material is preferably heated at from 80 °C to 120 °C for a period of from 2 hours to 6 hours to remove moisture contained in the starting material, before the shaping process is carried out. When the heating is insufficient, moisture vaporizes during the shaping process, and defective forming, such as burn marks, may occur due to compression in the mold.

The temperature employed for melting the resin material is equal to or higher than the melting point of the resin material. The forming is carried out at an appropriately elevated temperature in order to enhance the fluidity of the resin material in the mold and enhance the shape transferability of the mold for shaping. However, when the resin material is melted by being heated to a temperature above 290 °C, the decomposition of the thermoplastic material is enhanced and the material itself deteriorates, thereby causing a severe adverse effect on the properties of the formed product. Therefore, the forming is preferably carried out at a temperature of 290 °C or lower.

Ordinary plunger type or pre-plunger type injection molding machines may be used as the machine used for the forming.

The melting point of the resin material is preferably set to a temperature of from about 160 °C to about 250 °C from the viewpoint of reducing deformation during high-temperature short-period vulcanization. When the resin material has a melting point of from about 160 °C to about 250 °C, the forming of the tire frame piece or the joining together of the tire frame pieces, for example, may be carried at a temperature of 290 °C or lower. Since the joining together of the tire frame pieces can be carried out at the above-described temperature, deterioration of the resin that forms the tire frame pieces can be reduced, and the tire productivity can be improved in terms of, for example, energy utilization efficiency. In a tire frame obtained by joining together tire frame pieces in which the thermoplastic elastomer is used, the adhesion strength of the tire frame pieces is sufficient, and the performance of the tire frame is not substantially deteriorated by the temperature at the time of the joining, the durability of the produced tire at running, such as puncture resistance or wear resistance, can be improved.

When the tire frame pieces are joined together, the faces of the tire frame pieces to be joined together may be heated to a temperature that is equal to or higher than the melting point of the resin material that forms the tire frame pieces. For example, the faces of the tire frame pieces to be joined together may be heated to a temperature of from (the melting point of the resin material + 10 °C) to (the melting point of the resin material + 70 °C). By heating the faces of the tire frame pieces to be joined together to a temperature that is equal to or higher than the melting point of the resin material that forms the tire frame pieces, the tire frame pieces are sufficiently joined together, whereby the productivity of the tire can be increased while increasing the durability of the tire.

The tire frame pieces are joined together preferably by adhesion by thermal fusion, to obtain a tire frame.

Before the tire frame is formed, a nucleating agent may be mixed into the resin material. Mixing of a nucleating agent into the resin material enables the crystallinity of the resin material (particularly, the polyamide in the specific thermoplastic elastomer) to increase, whereby the melting point of the resin material increases while an increase in the elastic modulus of the resin material is reduced.

The nucleating agent may be any nucleating agent that enhances the crystallinity of the resin material (particularly, the polyamide in the specific thermoplastic elastomer), without particular limitations. Examples of the nucleating agent include organic nucleating agents and inorganic nucleating agents.

Examples of inorganic nucleating agents include metal oxides, kaolin, talc, and clay. Examples of organic nucleating agents include: metal salts of organic carboxylic acids, such as sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanoate, potassium octacosanoate, sodium stearate, potassium stearate, lithium stearate, calcium stearate, magnesium stearate, barium stearate, sodium montanoate, calcium montanoate, sodium toluate, sodium salicylate, potassium salicylate, zinc salicylate, aluminum dibenzoate, potassium dibenzoate, lithium dibenzoate,

sodium β-naphthalate, and sodium cyclohexanecarboxylate; organic sulfonic acid salts, such as sodium p-toluenesulfonate and sodium sulfoisophthalate; carboxylic amides, such as stearamide, ethylene bis-lauramide, palmitamide, hydroxystearamide, erucamide, and tolymesic acid tris(t-butylamide); polymers such as low-density polyethylene, high-density polyethylene, polypropylene, polyisopropylene, polybutene, poly(4-methylpentene), poly(3-methyl-1-butene), polyvinylcycloalkane, polyvinyltrialkylsilane, and high-melting-point polylactic acid; a sodium or potassium salt of a polymer having a carboxyl group (a so-called ionomer), such as a sodium salt of an ethylene - acrylic acid copolymer, a sodium salt of an ethylene - methacrylic acid copolymer, and a sodium salt of a styrene - maleic anhydride copolymer; benzylidene sorbitol and derivatives thereof; metal salts of phosphorus-containing compounds, such as sodium 2,2'-methylene bis(4,6-di-t-butylphenyl)phosphate; and sodium 2,2'-methylene bis(4,6-di-t-butylphenolate).

-Further Details of Tire Frame~

The thickness of the thinnest part of the side portion of the tire frame is preferably from 0.5 mm to 10 mm, more preferably from 0.7 mm to 7 mm, and still more preferably from 1 mm to 5 mm. When the thickness of the side portion is 1 mm or more, deformation due to heat during vulcanization is reduced. When the thickness of the side portion is 10 mm or less, occurrence of unvulcanized region in the rubber member and overvulcanized region on the tread surface is reduced.

Here, the side portion refers to a portion from the bead portion to the periphery of the tread. The periphery of the tread refers to a region that becomes a tire-width-direction outermost region in the road-contacting part of the tire when the tire is mounted on a standard rim designated in JATMA YEAR BOOK, 2009 edition (standards made by Japan Automobile Tyre Manufacturers Association, Inc.), filled with air to have an inner pressure that is 100% of the air pressure (maximum air pressure) corresponding to the maximum load capacity (the load written in bold in the inner pressure - load capacity correspondence table) in the applied size ply rating in the JATMA YEAR BOOK, and subjected to the application of the load indicated as the maximum load capacity. When the TRA standards or the ETRTO standards are applied to the place of use or the place of production, the standards applied shall be used in the determination of the side portion.

<Rubber Member>

The tire according to the invention includes the tire frame described above and a rubber member. The rubber member is preferably disposed, as an outer covering member, at the outer side of the tire frame. Examples of the outer covering member include a tread member disposed at the crown portion of the tire frame, a side member disposed at the side portion of the tire frame, and a chafer member disposed at the bead portion of the tire frame. The rubber member as the outer covering member in the invention needs not be an outermost layer of the tire according to the invention, and, for example, a decorative layer and/or a protective layer may be provided at an outer surface of the outer covering member.

The rubber member is not particularly limited, and examples thereof include: natural rubber (NR); conjugated diene synthetic rubbers, such as polyisoprene synthetic rubber (IR), polybutadiene rubber (BR), styrene-butadiene copolymer rubber (SBR), acrylonitrile butadiene rubber (NBR), chloroprene rubber (CR), and butyl rubber (IIR); ethylene-propylene copolymer rubber (EPM); ethylene-propylene-diene copolymer rubber (EPDM); and polysiloxane rubber. These rubbers may be used singly, or in combination of two or more thereof. Among those described above, natural rubber (NR), and a mixture of natural rubber and a styrene-butadiene copolymer rubber (SBR/NR), are preferable from the viewpoint of adhesive force.

The rubber for forming the rubber member may be made of a rubber composition in which other components, such as additives, have been added to rubber in accordance with the purpose. Examples of additives include: reinforcing materials such as carbon black; fillers; vulcanizing agents; vulcanization accelerators; fatty acids; fatty acid salts; metal oxides; process oils; and anti-aging agents. These additives may be added, as appropriate.

The rubber member can be obtained by providing an unvulcanized rubber member in which rubber contained therein is in the unvulcanized state on a tire frame, and vulcanizing the rubber by heating. More specifically, for example, the unvulcanized rubber member is disposed on the tire frame with or without an adhesive layer between the unvulcanized rubber member and the tire frame, and at least a part of the unvulcanized rubber contained in the unvulcanized rubber member is heated to be vulcanized, as a result of which a rubber member provided on the tire frame can be obtained.

When the tire includes a tread member that is a rubber member, it is preferable that the tread member is neither excessively soft nor excessively hard, from the viewpoint of sufficiently exerting the performance as a tread member. Specifically, the tensile modulus of elasticity of the tread member is preferably from 0.1 MPa to 100 MPa, more preferably from 0.1 MPa to 50 MPa, and still more preferably from 0.1 MPa to 5.0 MPa.

<Vulcanization Treatment>

The tire including the tire frame and the rubber member is preferably subjected to vulcanization treatment. The vulcanization treatment is preferably carried out at a temperature that is higher than the glass transition temperature (Tg) of the resin material used for forming the tire frame. Specifically, the vulcanization temperature may be in the range of from Tg1 °C to (Tg1+200) °C, and is preferably from (Tg1+50) °C to (Tg1+150) °C, provided that the glass transition temperature of the resin material is Tg1 (°C).

In the present specification, the Tg of the resin material refers to the Tg of the polymer that forms the hard segment of the specific thermoplastic elastomer contained in the resin material. Tg can be measured using an ordinary differential scanning thermoanalyzer. In the present specification, a Tg value as measured using a differential scanning thermoanalyzer (manufactured by TA instruments, a differential scanning calorimeter (DSC)) at a temperature elevation rate of 5 °C / minute over the range of from 25 °C to 400 °C is taken as Tg.

The duration of vulcanization treatment is preferably from more than 0 hour to 6 hours, more preferably from more than 0 hour to 4 hours, still more preferably from more than 0 hour to 1 hour, and further more preferably from more than 0 hour to less than 0.2 hours.

When the temperature conditions and the heating time conditions are set to be within the above ranges, the morphology of the resin material contained in the formed tire frame gets into an equilibrium state, and the crystallization of the resin is accelerated, whereby the effect according to the invention is more effectively exerted.

The heating conditions (heating temperature, heating time) in the vulcanization treatment is selected, as appropriate, in accordance with the resin material to be used for forming the tire frame, as described above. The vulcanization temperature may be set in relation to the melting point of the specific thermoplastic elastomer in the resin material that includes the specific thermoplastic elastomer, as follows. For example, the vulcanization temperature is preferably from (the melting point (Tm) of the specific thermoplastic elastomer contained in the resin material - 100 °C) to (Tm of the specific thermoplastic elastomer - 5 °C), and more preferably from (Tm of the specific thermoplastic elastomer - 50 °C) to (Tm of the specific thermoplastic elastomer - 10 °C).

The heating method is not particularly limited, and examples thereof include: a method including disposing a tire including the tire frame and the rubber member in a mold, and directly heating the tire; a method of disposing the tire in a heating zone, and heating the tire using a non-contact heater such as an infrared radiation or hot air; and a method including heating the tire using an ultrasonic wave or a microwave. From the viewpoint of, for example, controllability of heat quantity, safety, and simplicity of the device, it is preferable to place the tire in a hot air drying apparatus at ordinary pressure and a suitably set heating temperature to stand still, heating the tire for a suitably set length of time, and taking out the tire and (forcibly or naturally) cooling the tire to room temperature.

The pressure in the vulcanization treatment may be appropriately set in accordance with the purpose. For example, heating may be carried out at a reduced pressure of 10 mmHg or lower using an ordinary vacuum pump apparatus, in order to promote removal of undesired components contained in the tire frame, such as moisture and monomers, as well as to achieve the desired improvement in the heat resistance. When it is desired to promote adhesion between tire frame pieces made of the same material or different materials, heating may be carried out at an increased pressure of 0.5 MPa or higher using an ordinary compressor apparatus.

In the vulcanization treatment described above, since the resin material that forms the tire frame is subjected to a temperature that is equal to or higher than the glass transition temperature (Tg) of the resin material, microscopic molecular movement occurs, and the elastic modulus of the material greatly reduces, i.e., the material softens. Therefore, there is a possibility that a stress, if applied to the tire frame during vulcanization treatment, easily causes deformation of the tire frame. In order to prevent the undesired deformation, a jig made of a material, such as iron, stainless steel, aluminum or titanium, that does not deform at the heating temperature and configured to maintain the desired shape of the tire frame may be arranged to conform to the shape of the tire frame. The vulcanization treatment enables the tire to have both of excellent heat resistance and low rolling frictional resistance, balanced at high level.

<Reinforcing Cord Layer>

The tire according to the invention may include a reinforcing cord layer, if desired. By forming a reinforcing cord layer by winding a reinforcing cord around the outer circumferential portion of the tire frame, the puncture resistance and the cut resistance of the tire is improved, and the rigidity of the tire (and the tire frame) in the circumferential direction is improved. The improvement of the rigidity in the circumferential direction reduces the creeping (a phenomenon in which the plastic deformation of the tire frame under a constant stress increases with lapse of time) of the tire frame made of the resin material.

The reinforcing cord layer may include a resin material. When the reinforcing cord layer includes a resin material, the difference between the hardness of the tire frame and the hardness of the reinforcing cord layer can be made small compared to a case in which the reinforcing cord layer made of a non-resinous material, such as steel wires, is fixed by

a cushion rubber. The decreased difference enables the reinforcing cord layer to more tightly contact the tire frame and be more securely fixed to the tire frame. As indicated above, the scope of the term "resin material" as used herein encompasses thermoplastic resins (including thermoplastic elastomers) and thermosetting resins, but does not include vulcanized rubbers.

Examples of thermosetting resins that can be used in the reinforcing cord layer include phenol resins, urea resins, melamine resins, epoxy resins, and polyamide resins. Examples of thermoplastic resins that can be used in the reinforcing cord layer include urethane resins, olefin resins, vinyl chloride resins, and polyamide resins.

Examples of thermoplastic elastomers that can be used in the reinforcing cord layer include amide-based thermoplastic elastomers (TPA), polyester-based thermoplastic elastomers (TPC), polyolefin-based thermoplastic elastomers (TPO), polystyrene-based thermoplastic elastomers (TPS), polyurethane-based thermoplastic elastomers (TPU), thermoplastic cross-linked rubbers (TPV), and other thermoplastic elastomers (TPZ), which are defined in JIS K6418. It is preferable to use a thermoplastic elastomer, in consideration of, for example, elasticity required at the time of traveling and moldability at the time of production.

The modulus of elasticity (the tensile modulus of elasticity defined in JIS K7113) of the resin material used in the reinforcing cord layer is preferably set to a value within a range of 0.1 times to 10 times the modulus of elasticity of the resin material that forms the tire frame. When the modulus of elasticity of the resin material used in the reinforcing cord layer is equal to or lower than 10 times the modulus of elasticity of the resin material that forms the tire frame, the crown portion is not excessively hard, and mounting onto a rim is facilitated. When the modulus of elasticity of the resin material used in the reinforcing cord layer is equal to or higher than 0.1 times the modulus of elasticity of the resin material that forms the tire frame, the resin in the reinforcing cord layer is not excessively soft, the belt in-plane shear stiffness is excellent, and cornering force is improved.

The reinforcing cord layer is preferably formed after the tire frame is formed. The forming of the reinforcing cord layer may be carried out either before or after the vulcanization treatment. In consideration of the stability of the reinforcing cord layer and the closeness of contact with the tire frame, the vulcanization treatment is preferably carried out after the forming of the reinforcing cord layer, which is optionally performed.

[First Embodiment]

A tire according to a first embodiment is described below with reference to drawings. A tire 10 according to the first embodiment is described below. Fig. 1A is a perspective view illustrating a cross-section of a part of a tire according to the first embodiment, and Fig. 1B is a cross-sectional view of a bead portion of the tire illustrated in Fig. 1A, in the state of being mounted on a rim. As illustrated in Figs. 1A and 1B, the tire 10 according to the first embodiment has a cross-sectional shape that is substantially similar to those of conventional general pneumatic rubber tires.

As illustrated in Fig. 1A, the tire 10 includes a tire case 17 that includes: a pair of bead portions 12 configured to contact a bead seat portion 21 and a rim flange 22 of a rim 20 illustrated in Fig. 1B; side portions 14 that each outwardly extend from its corresponding bead portion 12 in the tire radial direction; and a crown portion 16 (outer circumferential portion) that connects the tire-radial-direction outer end of one side portion 14 and the tire-radial-direction outer end of the other side portion 14.

The tire case 17 (tire frame) according to the first embodiment is made of a resin material that includes the thermoplastic elastomer. Although the tire case (tire frame) 17 is made of a single resin material in the first embodiment, the invention is not limited to this configuration. For example, a reinforcing member (for example, a polymer or metal fiber, a polymer or metal cord, a polymer or metal non-woven fabric, or a polymer or metal woven fabric) may be embedded in the tire case 17 (for example, in the bead portions 12, in the side portions 14 or in the crown portion 16, or in any combination thereof), so as to reinforce the tire case 17 with the reinforcing member.

The tire case 17 according to the first embodiment is a member obtained by joining together a pair of tire case half parts (tire frame pieces) 17A made of a resin material. Each tire case half part 17A is a resin molded body formed by, for example, injection molding of one bead portion 12, one side portion 14 and a half-width part of the crown portion 16 as an integrated body. The tire case 17 (tire frame) is formed by disposing the formed tire case half parts 17A, which have the same annular shape, to face to each other, and joining them together at the tire equatorial plane. The tire case 17 is not limited to those obtained by joining together two pieces, and may be formed by joining together three or more pieces.

Each of the tire case half parts 17A made of a resin material may be shaped using, for example, vacuum molding, pressure forming, injection molding or melt casting. Therefore, vulcanization is unnecessary, the production process can greatly be simplified, and the forming time can be saved, as compared to the case of forming a tire case with rubber as in conventional techniques.

In the first embodiment, the tire case half parts 17A have a bilaterally symmetric shape, i.e., one of the tire case half parts 17A has the same shape as the other tire case half part 17A. Therefore, there is also an advantage in that only one type of mold is required for forming the tire case half parts 17A.

In the first embodiment, an annular bead core 18 made of a steel cord similar to those used in conventional general pneumatic tires is embedded in each of the bead portions 12, as illustrated in Fig. IB. However, the invention is not limited to this configuration, and the bead core 18 may be omitted as long as it is ensured that the bead portion 12 has rigidity, and mounting on the rim 20 can be performed successfully. The bead core 18 may alternatively be made of, for example, an organic fiber cord, a resin-coated organic fiber cord, or a hard resin, instead of a steel cord.

In the first embodiment, an annular sealing layer 24 formed of a material having a higher sealing property than that of the resin material forming the tire case 17, for example rubber, is provided on a part of the bead portion 12 that contacts the rim 20 or at least on a part of the bead portion 12 that contacts the rim flange 22 of the rim 20. The sealing layer 24 may also be provided in a part in which the tire case 17 (the bead portion 12) and the bead seat 21 contact each other. A material softer than the resin material that forms the tire case 17 may be used as the material having a higher sealing property than that of the resin material that forms the tire case 17. As a rubber usable for the sealing layer 24, a rubber similar to rubbers used on the outer surfaces of the bead portions of conventional general pneumatic rubber tires is preferably used. When the sealing between the bead portion 12 and the rim 20 can be ensured only with resin material, the rubber sealing layer 24 may be omitted, or another thermoplastic resin having higher sealing property than that of the resin material may be used. Examples of another thermoplastic resin include a polyurethane-based resin, a polyolefin-based resin, and a polystyrene-based resin, and a blend of any of these resins with a rubber or an elastomer.

As illustrated in Fig. 1A, a reinforcing cord 26 having higher rigidity than that of the resin material forming the tire case 17 is wound around the crown portion 16 in the circumferential direction of the tire case 17. The reinforcing cord 26 is helically wound to form a reinforcing cord layer 28 in a state in which at least a part of the reinforcing cord 26 is embedded in the crown portion 16 in cross-sectional view taken along the axial direction of tire case 17. A tread 30 formed of a rubber material, which has higher wear resistance than that of the resin material forming the tire case 17, is disposed at the tire-radial-direction outer circumferential side of the reinforcing cord layer 28.

The reinforcing cord layer 28 formed by the reinforcing cord 26 is described below with reference to Fig. 2. Fig. 2 is a cross-sectional view taken along the tire rotation axis, which illustrates a state in which the reinforcing cord is embedded in the crown portion of the tire case of the tire according to the first embodiment. As illustrated in Fig. 2, the reinforcing cord 26 is helically wound in a state in which at least a part of the reinforcing cord 26 is embedded in the crown portion 16 in a cross-sectional view taken along the axial direction of the tire case 17, and, together with a part of the outer circumferential portion of the tire case 17, forms the reinforcing cord layer 28 indicated by the intermittent lines in Fig. 2. The part of the reinforcing cord 26 that is embedded in the crown portion 16 is in close contact with the resin material forming the crown portion 16 (of the tire case 17). A monofilament (single filament) of a metal fiber, an organic fiber, or the like, or a multifilament (stranded filament) in which such fibers are stranded, such as a steel cord composed of stranded steel fibers, may be used as the reinforcing cord 26. In the first embodiment, a steel cord is used as the reinforcing cord 26.

The depth L of embedding in Fig. 2 illustrates the depth of embedding of the reinforcing cord 26 in the tire case 17 (more specifically, the crown portion 16) along the tire rotation axis direction. The depth L of embedding of the reinforcing cord 26 in the crown portion 16 is preferably equal to or greater than 1/5 of the diameter D of the reinforcing cord 26, and more preferably more than 1/2 of the diameter D of the reinforcing cord 26. It is still more preferable that the entire reinforcing cord 26 is embedded in the crown portion 16. When the depth L of embedding of the reinforcing cord 26 is more than 1/2 of the diameter D of the reinforcing cord 26, the reinforcing cord 26 is difficult to drop off from the embedded portion due to the dimensions of the reinforcing cord 26. When the entire reinforcing cord 26 is embedded in the crown portion 16, the surface (the outer circumferential surface) becomes flat, whereby entry of air into an area around the reinforcing cord can be reduced even when a member is placed on the crown portion 16 in which the reinforcing cord 26 is embedded. The reinforcing cord layer 28 corresponds to a belt disposed on the outer circumferential surface of a carcass of a conventional pneumatic rubber tire.

As described above, the tread 30 is disposed on the tire-radial-direction outer circumferential side of the reinforcing cord layer 28. It is preferable that the same type of rubber as that used for conventional pneumatic rubber tires is used as the rubber used for the tread 30. A tread formed of another resin material having higher wear resistance than that of the resin material forming the tire case 17 may be used, in place of the tread 30. In the tread 30, a tread pattern composed of plural grooves is formed on the contact surface that comes into contact with a road surface, similarly to conventional pneumatic rubber tires.

[Second Embodiment]

Next, a tire according to a second embodiment is described with reference to drawings. A tire 200 according to the second embodiment is described below. Fig. 3 is a perspective view illustrating a cross-section of a part of a tire according to the second embodiment. As illustrated in Fig. 3, the tire 200 according to the second embodiment includes side members 15, which are rubber members serving as outer covering members, at the width-direction outer side of its corresponding side portion 14 of the tire case 17. In the explanation of Fig. 3, the same members as those illustrated

in Figs. 1A and 1B are designated by the same reference numerals as those in Figs. 1A and 1B, and explanations of such members are omitted.

The tire 200 according to the second embodiment includes side members 15, which are rubber members serving as outer covering members and attached to surfaces of the side portions 14, in addition to the tread 30 formed using a rubber material. The side members 15 are formed using the same material as that of the tread 30, specifically, a rubber material including additives, such as carbon black, in rubber. Similar to the case of the tread 30, the side members 15 preferably have higher wear resistance than that of the resin material forming the tire case 17. Each side member 15 directly contacts a surface of its corresponding side portion 14, and is fused to the surface at its interface.

Similar to the production of the tread 30, the side members 15 can be produced by, for example, injection molding. The side members 15 are vulcanized at high temperature within a short time, after injection molding. As illustrated in Fig. 3, the crown portion 16-side end portion of each side member 15 is adhered so as to overlap an end portion of the tread 30 in the second embodiment. The crown portion 16-side end portion of each side member 15 is preferably disposed so as to be located at the inner side in the tire radial direction than the end portion of the tread 30. The tread 30 and each side member 15 may be fused to each other at their interface at their overlapping end portions.

In the second embodiment, the attaching of the side members 15 and the tread 30 to the tire case 17 includes fusing the side members 15 to their respective side members of the tire case 17. The method used for attaching the side members 15 is not particularly limited, and may be a method including heating the side members 15 formed by injection molding, using, for example, a hot runner, thereby fusing the side members 15 to the outer circumferential surface of the side portions 14. The attaching of the side members 15 and the tread 30 to the tire case 17 further includes thereafter winding the belt-shaped tread 30 around the tire case 17 such that the end portions of the tread 30 overlap the end portions of the side members 15, and heating the tread 30 using, for example, a hot runner, thereby fusing the tread 30 to the outer circumferential face of the tire case 17.

Although the side members 15 are provided at surfaces of both of the side portions 14 of the tire case 17 in the second embodiment, the tire according to the invention is not limited to this embodiment. For example, the side member 15 may be provided at only one side in the tire width direction of the tire 200.

Although some embodiments are described above, the embodiments are examples, and various modifications may be made within the scope of the invention. Of course, the protection scope of the claims is not limited to the above embodiments.

In the first embodiment, a tire in which the tread member is made of a rubber material is described. In the second embodiment, a tire in which the tread member and the side members are made of a rubber material is described. In another embodiment, the tire includes a chafer member and a tread member (not illustrated in the drawings) as rubber members. In still another embodiment, only one of the chafer member or the tread member is made of a rubber material. In the second embodiment, a configuration may be adopted in which one of the tread member or the side member is made of a rubber material.

<Method of Manufacturing Tire>

An example of a method of manufacturing a tire according to the invention is described below, with reference to the first embodiment.

Tire Case (Tire Frame) Forming Process

First, tire case half parts (tire frame pieces) are formed using, for example, injection molding apparatus. Then, the tire case half parts supported by thin metal support rings are aligned to face each other. Subsequently, a jointing mold, not illustrated in the drawings, is placed so as to contact the outer circumferential surface of a portion (contact portion) at which the tire case half parts are contacted with each other. The jointing mold is configured to pressurize a region at or around the joint portion (the contact portion) of the tire case half parts 17A with a predetermined pressure. Then, the region at or around the joint portion of the tire case half parts is pressurized at a temperature equal to or higher than the melting point of the resin material that forms the tire case. When the joint portion of the tire case half parts is heated and pressurized by the jointing mold, the joint portion is melted, and the tire case half parts are fused with each other, as a result of which the members are integrated to form the tire case 17. Although the joint portion of the tire case half parts is heated using the jointing mold in the present process, the invention is not limited to this configuration; heating of the joint portion may be carried out using, for example, a separately provided high frequency heater, or the tire case half parts may be bonded by softening or melting the joint portion, in advance, via application of hot air, irradiation with infrared radiation, or the like, and pressurizing the joint portion using the jointing mold. The tire case half parts may thus be bonded together. In this process, the specific thermoplastic elastomer contained in the resin material that forms the tire case 17 may work to fuse the tire case half parts.

Reinforcing Cord Member Winding Process

Next, a reinforcing cord member winding process is described with reference to Fig. 4. Fig. 4 is an explanatory diagram explaining an operation to embed the reinforcing cord in the crown portion of the tire case using a cord heating device and rollers. In Fig. 4, a cord feeding apparatus 56 includes: a reel 58 on which a reinforcing cord 26 is wound; a cord heating device 59 disposed at the cord conveying direction downstream side of the reel 58; a first roller 60 disposed at the reinforcing cord 26 conveying direction downstream side of the cord heating device 59; a first cylinder device 62 for moving the first roller 60 in directions in which the first rollers comes into contact with and get away from the outer circumferential surface of the tire; a second roller 64 disposed at the reinforcing cord 26 conveying direction downstream side of the first roller 60; and a second cylinder device 66 for moving the second roller 64 in directions in which the second roller comes into contact with and get away from the outer circumferential surface of the tire. The second roller 64 can be used as a cooling roller formed of metal. In this process, the surface of the first roller 60 or the second roller 64 is coated with a fluororesin (for example, TEFLON (registered trademark)) with a view to suppressing adhesion of the melted or softened resin material. Although the cord feeding apparatus 56 is configured to have two rollers of the first roller 60 and the second roller 64 in Fig. 4, the invention is not limited to this configuration, and the cord feeding apparatus may be configured to have only one of these rollers (that is, a single roller).

The cord heating device 59 includes a heater 70 and a fan 72 that generate hot air. The cord heating device 59 includes a heating box 74 into which hot air is supplied and in which the reinforcing cord 26 passes through the inside space thereof, and a discharge outlet 76 through which the heated reinforcing cord 26 is discharged.

In the present process, first, the temperature of the heater 70 of the cord heating device 59 is increased, and the air around the heater 70 heated by the heater 70 is sent to the heating box74 by an air current generated by the rotation of the fan 72. Then, the reinforcing cord 26 drawn out from the reel 58 is fed to the inside of the heating box 74, of which the inner space is heated with hot air, whereby the reinforcing cord 26 is heated (for example, to increase the temperature of the reinforcing cord 26 to be approximately 100°C to 200°C). The heated reinforcing cord 26 passes through the discharge outlet 76, and is helically wound, with a constant tension, around the outer circumferential surface of the crown portion 16 of the tire case 17 rotating in the direction indicated by arrow R in Fig. 4. Here, as a result of the heated reinforcing cord 26 coming into contact with the outer circumferential surface of the crown portion 16, the resin material at the contact portion is melted or softened, and at least a part of the heated reinforcing cord 26 is embedded in the outer circumferential surface of the crown portion 16. In this process, since the heated reinforcing cord 26 is embedded in the melted or softened resin material, a state is achieved in which there are no gaps between the resin material and the reinforcing cord 26, namely a close contact state. Accordingly, the incorporation of air into the portion in which the reinforcing cord 26 is embedded is reduced. By heating the reinforcing cord 26 to a temperature higher than the melting point of the resin material forming the tire case 17, the melting or softening of the resin material in the portion contacting the reinforcing cord 26 is promoted. By employing the above process, embedding of the reinforcing cord 26 in the outer circumferential surface of the crown portion 16 is facilitated, and the incorporation of air can effectively be reduced. Incidentally, in Fig. 4, a bead core 18 is disposed in each of the bead portions 12

(Rubber Member Providing Process)

Then, a belt-shaped unvulcanized tread 30, which is a rubber member, is wound around the outer circumferential surface of the tire case 17 for one revolution, and the tread 30 is bonded to the outer circumferential surface of the tire case 17 using, for example, an adhesive. For example, precured treads known thus far for use in retreaded tires may be used as the tread 30. The present process is a process similar to the process of bonding a precured tread to the outer circumferential surface of a casing of a retreaded tire.

(Vulcanization Treatment)

Next, the tire frame in which the reinforcing cord layer has been formed and the tread has been adhered is vulcanized. The heating in the vulcanization treatment is preferably performed within the temperature range of from 100 °C to 250 °C for a length of time in the range of from more than 0 hour to less than 0.2 hours. The tire frame in which the reinforcing cord layer has been formed is disposed in a relative orientation to the heat source such that homogenous heat transfer is possible, and the vulcanization treatment is performed using a heated air dryer. After the tire frame is heated for a suitably set length of time, the tire frame is allowed to cool to room temperature.

A tire 10 can be completed by bonding a sealing layer 24 formed of a vulcanized rubber to the bead portion 12 of the tire case 17 using, for example, an adhesive.

In the tire 10 according to the first embodiment, the tire case 17 is made of a resin material. Due to this configuration, the structure of the tire case can be simplified, and the weight of the tire case can be reduced, compared to conventional rubbers. Therefore, when the tire 10 according to the first embodiment is used in motorcars, the weights

of the motorcars can be reduced, and fuel consumption can be reduced. Further, the tire 10 according to the first embodiment includes the tire case 17 made of a resin material including the specific thermoplastic elastomer, and the temperature of deflection under load of the resin material is 150 °C or higher, the tire 10 is capable of high-temperature short-period vulcanization, and provides excellent ride quality.

Although specific modes are described above by reference to the first embodiment, the above-described modes are not limitative.

The method used for manufacturing a tire according to the second embodiment may be the same method as that in the first embodiment, except that the side members that are rubber members are also arranged, in addition to the tread member.

As illustrated in the first and second embodiments, the tire according to the invention may have the following configuration. Specifically, the tire obtained by the manufacturing method according to the invention may be configured such that at least a part of the reinforcing cord is embedded in the outer circumferential portion of the tire frame made of the resin material, in a cross-sectional view taken along the axis direction of the tire frame. Further, a tread made of a material with a higher wear resistance than that of the resin material may be provided at the tire-radial-direction outer side of the reinforcing cord layer.

(Effect)

The tire according to the invention is capable of high-temperature short-period vulcanization and provides excellent ride quality due to the configuration in which, in a tire including a rubber member and a round tire frame made of a resin material including a thermoplastic elastomer, the deflection temperature under load of the resin material is 150 °C or higher and the hard segment of the thermoplastic elastomer is the specific hard segment defined above.

EXAMPLES

Further explanations of the invention are given below by way of examples. However, the invention is not limited thereto.

A number average molecular weight as measured using gel permeation chromatography (GPC) is taken as a molecular weight. A GPC (gel permeation chromatograph) such as HLC-8320GPC EcoSEC manufactured by Tosoh Corporation was used as the measurement instrument.

Example 1

*Synthesis of Polyamide 6 as Hard Segment*

600 g of caprolactam, 92 g of dodecanedioic acid and 46.4 g of aminohexanoic acid, which were manufactured by Aldrich, were added into a 2L reaction vessel equipped with a stirrer, a nitrogen gas inlet and a condensed water discharge port. The air inside the reaction vessel was sufficiently replaced by nitrogen, and then the content in the reaction vessel was heated to 250 °C and allowed to react for 4 hours at an elevated pressure of 1.2 MPa. After the pressure was relieved, the content in the flask was allowed to react another 1 hour under nitrogen flow, and washed with water. As a result, polyamide 6 (PA6: NYLON (registered trademark) 6) having a number average molecular weight of 2400 was obtained in the form of a white solid.

*Synthesis of Thermoplastic Elastomer*

500 g of the PA6 (a polymer for forming a hard segment) and 167 g of PPG-800 (polypropylene glycol having a number average molecular weight of 800, manufactured by Sanyo Chemical Industries, Ltd.; a polymer for forming a soft segment) were mixed to form a mixture. The mixture was stirred at 230 °C for 7 hours under nitrogen flow, to obtain a white thermoplastic elastomer.

*Production of Tire Frame*

The obtained thermoplastic elastomer was processed into pellets, and a tire frame was formed by injection molding at 220 °C using the pellets.

*Production of Tire*

The tire frame obtained, and rubber members as side members, were adhered using an adhesive for resin-rubber adhesion. Similar to the adhesion of the side members, a rubber member as a tread member was adhered to the tire frame, using an adhesive for resin-rubber adhesion. The tire frame, to which the side members and the tread member had been adhered, was vulcanized at 170 °C for 10 minutes, thereby producing a tire having a 195/65R15 size.

Example 2

A thermoplastic elastomer was obtained in the same manner as that in Example 1, except that the amount of dodecanedioic acid was changed to 118.5 g, that a PA6 having a number average molecular weight of 1860 was obtained as a polymer for forming a hard segment, and that the 167 g of PPG-800 as the polymer for forming a soft segment was replaced by 175 g of PTMG650 (polytetramethylene ether glycol having a number average molecular weight of 650, manufactured by Wako Pure Chemical Industries, Ltd.). Using the obtained thermoplastic elastomer, a tire was produced in the same manner as that in Example 1.

Example 3

A thermoplastic elastomer was obtained in the same manner as that in Example 1, except that the amount of dodecanedioic acid was changed to 147 g, that a PA6 having a number average molecular weight of 1500 was obtained as a polymer for forming a hard segment, and that the 167 g of PPG-800 as the polymer for forming a soft segment was replaced by 217 g of PTMG650. P22 as a nucleating agent (manufactured by Bruggemann Chemical) was added to the obtained thermoplastic elastomer such that the amount of P22 was 0.1% by mass of the total mass of the thermoplastic elastomer, and the resultant mixture was blended using a twin-screw kneader and processed into pellets. Using the pellets, a tire was produced in the same manner as that in Example 1.

Example 4

*Synthesis of Thermoplastic Elastomer*

292 g of adipic acid, 116 g of hexamethylene diamine, 182 g of PTMG650, 150 g of purified water, and 0.7 g of sodium hypophosphite were added into a 2L reaction vessel equipped with a stirrer, a nitrogen gas inlet and a condensed water discharge port. The content in the reaction vessel was blended to obtain a mixture. After the air inside the reaction vessel was replaced by nitrogen, the mixture was heated to 260 °C while the reaction vessel was sealed to confine the pressure. After the pressure inside the reaction vessel reached 0.5 MPa, the pressure was gradually relieved, and the content in the reaction vessel was stirred at 260 °C for 5 hours under nitrogen flow. As a result, a thermoplastic elastomer including a polyamide 66 (PA66: NYLON (registered trademark) 66) having a number average molecular weight of 1500 as a hard segment and a PTMG (polytetramethylene ether glycol) having a number average molecular weight of 650 as a soft segment, was obtained.

*Production of Tire Frame and Tire*

The obtained thermoplastic elastomer was processed into pellets, and unreacted monomers were removed therefrom by performing thermal extraction with isopropanol for 12 hours. The pellets of the thermoplastic elastomer after the removal of unreacted monomers were injection-molded at 280 °C, to produce a tire frame. Using the tire frame obtained, a tire was produced in the same manner as that in Example 1.

Example 5

*Synthesis of Polyamide 12 as Hard Segment*

600 g of laurolactam, 73.6 g of dodecanedioic acid and 24.4 g of aminohexanoic acid, which were manufactured by Aldrich, were added into a 2L reaction vessel equipped with a stirrer, a nitrogen gas inlet and a condensed water discharge port. The air inside the reaction vessel was sufficiently replaced by nitrogen, and then the content in the reaction vessel was heated to 250 °C and allowed to react for 4 hours at an elevated pressure of 0.6 MPa. After the pressure was relieved, the content in the flask was allowed to react another 1 hour under nitrogen flow, and washed with water. As a result, polyamide 12 (PA12: NYLON (registered trademark) 12) having a number average molecular weight of 3000 was obtained in the form of a white solid.

*Synthesis of Thermoplastic Elastomer*

500 g of the PA12 (a polymer for forming a hard segment) and 167 g of JEFFAMINE RT-1000 (a copolymer of PTMG/PPG having a number average molecular weight of 1000, manufactured by HUNTSMAN; a polymer for forming a soft segment) were mixed to form a mixture. The mixture was stirred at 230 °C for 7 hours under nitrogen flow, to obtain a white thermoplastic elastomer. P22 as a nucleating agent (manufactured by Bruggemann Chemical) was added to the obtained thermoplastic elastomer such that the amount of P22 was 0.1% by mass of the total mass of the thermoplastic elastomer, and the resultant mixture was blended using a twin-screw kneader and processed into pellets.

*Production of Tire Frame and Tire*

Using the pellets of the thermoplastic elastomer, a tire frame, and then a tire, were prepared in the same manner as that in Example 1.

Comparative Example 1

A thermoplastic elastomer was obtained in the same manner as that in Example 5, except that the amount of aminohexanoic acid was changed to 43.7 g, that the amount of dodecanedioic acid was changed to 96 g, and that the amount of JEFFAMINE RT-1000 was changed to 250 g. Using the obtained thermoplastic elastomer, a tire was produced in the same manner as that in Example 5.

Comparative Example 2

A tire was produced in the same manner as that in Example 5, except that the amount of dodecanedioic acid was changed to 112.7 g, and that the 167 g of JEFFAMINE RT-1000 was replaced by 167 g of PPG650. The thermoplastic elastomer formed in this comparative example included a polyamide 12 having a number average molecular weight of 1950 as a hard segment and a PTMG having a number average molecular weight of 650 as a soft segment.

Comparative Example 3

A thermoplastic elastomer was obtained in the same manner as that in Example 1, except that a PA6 having a number average molecular weight of 3200 was obtained as the polymer for forming a hard segment by changing the amount of dodecanedioic acid to 69 g, and that the 167 g of PPG-800 as the polymer for forming a soft segment was replaced by 156 g of JEFFAMINE RT-1000. Using the obtained thermoplastic elastomer, a tire was produced in the same manner as that in Example 1.

Comparative Example 4

A thermoplastic elastomer was obtained in the same manner as that in Example 1, except that a PA6 having a number average molecular weight of 400 was obtained as the polymer for forming a hard segment by changing the amount of dodecanedioic acid to 552 g, and that the 167 g of PPG-800 as the polymer for forming a soft segment was replaced by 812.5 g of PTMG650. Using the obtained thermoplastic elastomer, a tire was produced in the same manner as that in Example 1.

Comparative Example 5

A tire was produced in the same manner as that in Example 5, except that the amount of dodecanedioic acid was changed to 46.7 g, that the 167 g of JEFFAMINE RT-1000 was replaced by 213 g of ELASTAMINE RT-2009 (having a number average molecular weight of 2000, manufactured by HUNTSMAN), and that the nucleating agent was not added to the thermoplastic elastomer.

Example 6

*Synthesis of Thermoplastic Elastomer*

292 g of adipic acid, 258 g of hexadecane diamine, 182 g of PTMG650, 150 g of purified water, and 0.7 g of sodium hypophosphite were added into a 2L reaction vessel equipped with a stirrer, a nitrogen gas inlet and a condensed water discharge port. The content in the reaction vessel was blended to obtain a mixture. After the air inside the reaction

vessel was replaced by nitrogen, the mixture was heated to 250 °C while the reaction vessel was sealed to confine the pressure. After the pressure inside the reaction vessel reached 0.5 MPa, the pressure was gradually relieved, and the content in the reaction vessel was stirred at 245 °C for 5 hours under nitrogen flow. As a result, a thermoplastic elastomer including a polyamide 610 (PA610: NYLON (registered trademark) 610) having a number average molecular weight of 2000 as a hard segment and a PTMG having a number average molecular weight of 650 as a soft segment, was obtained.

*Production of Tire Frame and Tire*

The obtained thermoplastic elastomer was processed into pellets, and unreacted monomers were removed therefrom by performing thermal extraction with isopropanol for 12 hours. The pellets of the thermoplastic elastomer after the removal of unreacted monomers were injection-molded at 270 °C, to produce a tire frame. Using the tire frame obtained, a tire was produced in the same manner as that in Example 1.

Example 7

*Production of Thermoplastic Elastomer*

450 g of aminoundecanoic acid (manufactured by Wako Pure Chemical Industries, Ltd.), 150 g of JEFFAMINE RT-1000, and 0.7 g of sodium hypophosphite were added into a 2L reaction vessel equipped with a stirrer, a nitrogen gas inlet and a condensed water discharge port. The content in the reaction vessel was blended to obtain a mixture. After the air inside the reaction vessel replaced by nitrogen, the mixture was stirred at 230 °C for 7 hours. As a result, a white thermoplastic elastomer including a polyamide 11 (PA11: NYLON (registered trademark) 11) having a number average molecular weight of 3000 as a hard segment and a copolymer of PTMG/PPG having a number average molecular weight of 1000 as a soft segment, was obtained.

*Production of Tire Frame and Tire*

The obtained thermoplastic elastomer was processed into pellets, and a tire frame was produced by injection molding at 260 °C using the pellets. Using the tire frame obtained, a tire was produced in the same manner as that in Example 1.

Example 8

A tire was produced in the same manner as that in Example 3, except that the amount of dodecanedioic acid was changed to 170 g, and that the amount of PTMG650 was changed to 250 g. The thermoplastic elastomer formed in this example included a PA6 having a number average molecular weight of 1300 as a hard segment and a PTMG having a number average molecular weight of 650 as a soft segment.

Example 9

A tire was produced in the same manner as that in Example 5, except that the amount of dodecanedioic acid was changed to 55.2 g, that the 167 g of JEFFAMINE RT-1000 was replaced by 175 g of PPG1400 (polypropylene glycol having a number average molecular weight of 1400, manufactured by Wako Pure Chemical Industries, Ltd.), and that the nucleating agent was not added to the thermoplastic elastomer. The thermoplastic elastomer formed in this example included a PA12 having a number average molecular weight of 4000 as a hard segment and a PPG having a number average molecular weight of 1400 as a soft segment.

Example 10

A tire was produced in the same manner as that in Example 5, except that the amount of dodecanedioic acid was changed to 75.9 g, and that the amount of JEFFAMINE RT-1000 was changed to 172 g. The thermoplastic elastomer formed in this example included a PA12 having a number average molecular weight of 2900 as a hard segment and a copolymer of PTMG/PPG having a number average molecular weight of 1000 as a soft segment.

Example 11

A tire was produced in the same manner as that in Example 5, except that the amount of dodecanedioic acid was changed to 63.3 g, and that the 167 g of JEFFAMINE RT-1000 was replaced by 63 g of JEFFAMINE D-440 (PPG

having a number average molecular weight of 440, manufactured by HUNTSMAN; a polymer for forming a soft segment). The thermoplastic elastomer formed in this example included a PA12 having a number average molecular weight of 3500 as a hard segment and a PPG having a number average molecular weight of 440 as a soft segment.

Example 12

*Synthesis of Thermoplastic Elastomer*

146 g of adipic acid, 87 g of hexamethylene diamine, 1440 g of polyproylene glycol (having a number average molecular weight of 12,500, manufactured by Asahi Glass Co., Ltd.), 75 g of purified water, and 0.35 g of sodium hypophosphite were added into a 2L reaction vessel equipped with a stirrer, a nitrogen gas inlet and a condensed water discharge port. The content in the reaction vessel was blended to obtain a mixture. After the air inside the reaction vessel was replaced by nitrogen, the mixture was heated to 260 °C while the reaction vessel was sealed to confine the pressure. After the pressure inside the reaction vessel reached 0.5 MPa, the pressure was gradually relieved, and the content in the reaction vessel was stirred at 260 °C for 5 hours under nitrogen flow. As a result, a thermoplastic elastomer including a polyamide 66 having a number average molecular weight of 2000 as a hard segment and a PPG having a number average molecular weight of 12500 as a soft segment, was obtained.

*Production of Tire Frame and Tire*

The obtained thermoplastic elastomer was processed into pellets, and unreacted monomers were removed therefrom by performing thermal extraction with isopropanol for 12 hours. The pellets of the thermoplastic elastomer after the removal of unreacted monomers were injection-molded at 280 °C, to produce a tire frame. Using the tire frame obtained, a tire was produced in the same manner as that in Example 1.

<Evaluations>

The following evaluations were carried out with respect to the tire frame and the tire in each of the Examples and the Comparative Examples. The results of the evaluations are indicated in Tables 1 and 2 below.

[Evaluation of Tensile Modulus of Elasticity]

A dumbbell-shaped test piece (size 3 test piece) as defined in JIS K6251:1993 was stamped out from the tire frame produced in each of the Examples and the Comparative Examples, and used as a test piece. The tensile modulus of elasticity of the test piece was measured at a pulling rate set at 200 mm/min using a Shimadzu autograph AGS-J (5KN) manufactured by Shimadzu Corporation.

[Melting Point of Resin Material]

About 1 g of the resin material was cut out from the tire frame produced in each of the Examples and the Comparative Examples, and used as a test piece. The melting point of the test piece was measured using a differential scanning calorimeter (DSC) manufactured by TA Instruments.

[Evaluation of Deflection Temperature under Load]

The pellets produced for the production of the tire frame in each of the Examples and the Comparative Examples was injection-molded using a mold having a shape of the multipurpose test piece as specified in JIS K7139:2009 or ISO-3167, thereby preparing a test piece for evaluation having a size of 127 mm × 10 mm and a thickness of 4 mm.

With respect to the obtained test piece for evaluation, a deflection temperature (ASTM D648) was measured under a load of 0.45 MPa and under a load of 1.8 MPa using a HDT/VSPT test instrument manufactured by Ueshima Seisakusho Co., Ltd. The measurement method and the conditions were as follows.

The test piece for evaluation was supported at two points with a distance between the supporting points of 100 mm, and a load of 0.46 MPa or 1.8 MPa was applied to the midpoint between the supporting points. The space around the test piece was filled with a silicone oil, and the temperature was increased at a temperature elevation rate of 120 °C/hr. The temperature when the deflection amount of the test piece for evaluation reached 0.2% was taken as the deflection temperature under load. It is assumed that a deflection temperature under load of 150 °C or higher is required for the tire according to the invention.

[Deformation After Vulcanization]

The tires of the Examples and the Comparative Examples were evaluated with respect to deformation observed with the naked eyes after vulcanization, workability at mounting on a rim, and the occurrence of air leakage, according to the following evaluation criteria. The evaluation results are indicated in Tables 1 and 2.

-Evaluation Criteria-

A: No deformation is observed after vulcanization, and there is no problem in terms of workability at mounting on a rim and air leakage
B: Use as a tire frame is tolerable, but slight deformation is observed
C: Substantial deformation is observed after vulcanization, and mounting on a rim is impossible or air leakage occurs after mounting on a rim

[Evaluation of Ride Quality]

Each of the tires of the Examples and the Comparative Examples was mounted on a standard rim (7JJ) as defined in JATMA YEAR BOOK (published by Japan Automobile Tyre Manufacturers Association, Inc.). The tire on the rim was placed on a flat plate, at a pneumatic pressure of 230 kPa and a tire load of 4165N, and the maximum deflection in the tire radial direction (vertical spring rate) was measured. Evaluation was carried out according to the following evaluation criteria, using the evaluation result of the tire of Example 1 as the standard reference.

-Evaluation Criteria-

A: The maximum deflection of the tested tire ≥ ((the maximum deflection of the tire of Example 1) × 1.10)
B: ((the maximum deflection of the tire of Example 1) × 0.90) < the maximum deflection of the tested tire < ((the maximum deflection of the tire of Example 1) × 1.10)
C: The maximum deflection of the tested tire ≤ ((the maximum deflection of the tire of Example 1) × 0.90)

Table 1

| | Example 1 | Example 2 | Example 3 | Example 4 | Example 5 | Comparative Example 1 | Comparative Example 2 |
|---|---|---|---|---|---|---|---|
| Hard Segment | PA6 | PA6 | PA6 | PA66 | PA12 | PA12 | PA12 |
| Minimum Number of Carbons | 6 | 6 | 6 | 6 | 12 | 12 | 12 |
| Molecular Weight of Hard Segment | 2400 | 1860 | 1500 | 1500 | 3000 | 2000 | 1950 |
| Molecular Weight of Soft Segment | 800 | 650 | 650 | 650 | 1000 | 1000 | 650 |
| Nucleating Agent (% by mass) | Not Added | Not Added | 0.1 | Not Added | 0.1 | 0.1 | Not Added |
| Tensile Modulus of Elasticity (MPa) | 350 | 320 | 300 | 360 | 310 | 280 | 280 |
| Melting Point (°C) | 213 | 205 | 205 | 235 | 172 | 165 | 162 |
| Deflection Temperature under Load (°C) | 200 | 202 | 180 | 221 | 167 | 147 | 145 |

(continued)

| | Example 1 | Example 2 | Example 3 | Example 4 | Example 5 | Comparative Example 1 | Comparative Example 2 |
|---|---|---|---|---|---|---|---|
| Deformation after Vulcanization | A | A | A | A | A | B | B |
| Ride Quality | B | A | A | B | A | C | C |

Table 2

| | Comparative Example 3 | Comparative Example 4 | Comparative Example 5 | Example 6 | Example 7 | Example 8 | Example 9 | Example 10 | Example 11 | Example 12 |
|---|---|---|---|---|---|---|---|---|---|---|
| Hard Segment | PA6 | PA6 | PA12 | PA610 | PA11 | PA6 | PA12 | PA12 | PA12 | PA66 |
| Minimum Number of Carbons | 6 | 6 | 12 | 6 | 11 | 6 | 12 | 12 | 12 | 6 |
| Molecular Weight of Hard Segment | 3200 | 400 | 4700 | 2000 | 3000 | 1300 | 4000 | 2900 | 3500 | 2000 |
| Molecular Weight of Soft Segment | 1000 | 650 | 2000 | 650 | 1000 | 650 | 1400 | 1000 | 440 | 12500 |
| Nucleating Agent (% by mass) | Not Added | Not Added | Not Added | Not Added | Not Added | 0.1 | Not Added | 0.1 | Not Added | Not Added |
| Tensile Modulus of Elasticity (MPa) | 380 | 200 | 370 | 330 | 310 | 290 | 345 | 298 | 305 | 345 |
| Melting Point (°C) | 230 | 153 | 177 | 195 | 175 | 169 | 175 | 167 | 173 | 205 |
| Deflection Temperature under Load (°C) | 216 | 140 | 162 | 180 | 157 | 153 | 162 | 152 | 158 | 199 |
| Deformation after Vulcanization | A | C | A | A | A | B | A | B | A | A |
| Ride Quality | C | A | C | A | A | A | B | A | B | B |

As is seen from the evaluation results of Examples indicated in Tables 1 and 2, tires including a resin material having a deflection temperature under load of 150 °C or higher and in which the resin material includes a thermoplastic elastomer including the specific hard segment are capable of being vulcanized by a high-temperature short-period vulcanization, and provide excellent ride quality.

## Claims

1. A tire comprising a rubber member and a round tire frame made of a resin material including a thermoplastic elastomer, the resin material having a deflection temperature under load of 150 °C or higher, the thermoplastic elastomer including a soft segment and a hard segment derived from a polyamide, a minimum number X of carbon atoms present between nitrogen atoms in a main chain of the polyamide in the hard segment and a number average molecular weight Y of the hard segment satisfying the following Formulae 1 to 3:

$$\text{Formula 1:} \qquad Y = 250X + A$$

$$\text{Formula 2:} \qquad 6 \leq X \leq 12$$

$$\text{Formula 3:} \qquad -1000 \leq A \leq 1500.$$

2. The tire according to claim 1, wherein a number average molecular weight of the soft segment is from 500 to 12,000.

3. The tire according to claim 1 or claim 2, wherein A in formula 1 satisfies the following Formula 4:

$$\text{Formula 4:} \qquad -750 \leq A \leq 1250.$$

4. The tire according to any one of claims 1 to 3, wherein A in formula 1 satisfies the following Formula 5:

$$\text{Formula 5:} \qquad -500 \leq A \leq 1000.$$

5. The tire according to any one of claims 1 to 4, wherein a content of the hard segment in the thermoplastic elastomer is from 5% by mass to 95% by mass with respect to a total amount of the thermoplastic elastomer.

6. The tire according to any one of claims 1 to 5, wherein a ratio of the number average molecular weight of the hard segment to a number average molecular weight of the soft segment in the thermoplastic elastomer is in a range of from 45/55 to 90/10.

7. The tire according to any one of claims 1 to 6, wherein a content of the thermoplastic elastomer in the resin material is from 55% by mass to 100% by mass with respect to a total amount of the resin material.

8. The tire according to any one of claims 1 to 7, wherein a melting point of the thermoplastic elastomer is from 160 °C to 250 °C.

9. The tire according to any one of claims 1 to 8, wherein the resin material further comprises another thermoplastic elastomer than the thermoplastic elastomer including the soft segment and the hard segment.

10. The tire according to any one of claims 1 to 9, wherein a thickness of a side portion of the tire frame is from 1 mm to 10 mm.

11. The tire according to any one of claims 1 to 10, wherein a tensile modulus of elasticity of the resin material is from 100 MPa to 1000 MPa.

12. The tire according to any one of claims 1 to 11, wherein a tensile strength at yield of the resin material is from 5 MPa to 20 MPa.

13. The tire according to any one of claims 1 to 12, wherein a tensile elongation at yield of the resin material is from 10% to 70%.

14. The tire according to any one of claims 1 to 13, wherein a tensile elongation at break of the resin material is 50% or more.

**Patentansprüche**

1. Reifen, umfassend ein Gummielement und ein rundes Reifengerüst, das aus einem Harzwerkstoff, der ein thermoplastisches Elastomer einschließt, hergestellt ist, wobei der Harzwerkstoff eine Formbeständigkeitstemperatur unter Last von 150 °C oder mehr aufweist, wobei das thermoplastische Elastomer ein weiches Segment und ein hartes Segment, die von einem Polyamid abgeleitet sind, einschließt, wobei eine Mindestanzahl X von Kohlenstoffatomen, die zwischen Stickstoffatomen in einer Hauptkette des Polyamids in dem harten Segment vorhanden sind, und ein zahlengemitteltes Molekulargewicht Y des harten Segments die folgenden Formeln 1 bis 3 erfüllen:

$$\text{Formel 1: } Y = 250X + A$$

$$\text{Formel 2: } 6 \leq X \leq 12$$

$$\text{Formel 3: } -1000 \leq A \leq 1500.$$

2. Reifen nach Anspruch 1, wobei ein zahlengemitteltes Molekulargewicht des weichen Segments von 500 bis 12000 beträgt.

3. Reifen nach Anspruch 1 oder Anspruch 2, wobei A in Formel 1 die folgende Formel 4 erfüllt:

$$\text{Formel 4: } -750 \leq A \leq 1250.$$

4. Reifen nach einem der Ansprüche 1 bis 3, wobei A in Formel 1 die folgende Formel 5 erfüllt:

$$\text{Formel 5: } -500 \leq A \leq 1000.$$

5. Reifen nach einem der Ansprüche 1 bis 4, wobei ein Gehalt des harten Segments in dem thermoplastischen Elastomer von 5 Masse-% bis 95 Masse-% in Bezug auf eine Gesamtmenge des thermoplastischen Elastomers beträgt.

6. Reifen nach einem der Ansprüche 1 bis 5, wobei ein Verhältnis des zahlengemittelten Molekulargewichts des harten Segments zu einem zahlengemittelten Molekulargewicht des weichen Segments in dem thermoplastischen Elastomer in einem Bereich von 45/55 bis 90/100 liegt.

7. Reifen nach einem der Ansprüche 1 bis 6, wobei ein Gehalt des thermoplastischen Elastomers in dem Harzwerkstoff von 55 Masse-% bis 100 Masse-% in Bezug auf die Gesamtmenge des Harzwerkstoffs beträgt.

8. Reifen nach einem der Ansprüche 1 bis 7, wobei ein Schmelzpunkt des thermoplastischen Elastomers von 160 °C bis 250 °C beträgt.

9. Reifen nach einem der Ansprüche 1 bis 8, wobei der Harzwerkstoff ferner ein anderes thermoplastisches Elastomer als das thermoplastische Elastomer, welches das weiche Segment und das harte Segment einschließt, umfasst.

**10.** Reifen nach einem der Ansprüche 1 bis 9, wobei eine Dicke eines Seitenabschnitts des Reifengerüsts von 1 mm bis 10 mm beträgt.

**11.** Reifen nach einem der Ansprüche 1 bis 10, wobei ein Zugelastizitätsmodul des Harzwerkstoffs von 100 MPa bis 1000 MPa beträgt.

**12.** Reifen nach einem der Ansprüche 1 bis 11, wobei eine Streckgrenze des Harzwerkstoffs von 5 MPa bis 20 MPa beträgt.

**13.** Reifen nach einem der Ansprüche 1 bis 12, wobei eine Streckdehnung des Harzwerkstoffs von 10 % bis 70 % beträgt.

**14.** Reifen nach einem der Ansprüche 1 bis 13, wobei eine Bruchdehnung des Harzwerkstoffs 50 % oder mehr beträgt.

**Revendications**

**1.** Bandage pneumatique, comprenant un élément de caoutchouc et un cadre de bandage pneumatique rond composé d'un matériau de résine incluant un élastomère thermoplastique, le matériau de résine ayant une température de fléchissement sous charge de 150° C ou plus, l'élastomère thermoplastique incluant un segment mou et un segment dur dérivés d'un polyamide, un nombre minimal X d'atomes de carbone présents entre des atomes d'azote dans une chaîne principale du polyamide dans le segment dur et un poids moléculaire moyen en nombre Y du segment dur satisfaisant les formules 1 à 3 ci-dessous :

$$\text{Formule 1 :} \quad Y = 250X + A$$

$$\text{Formule 2 :} \quad 6 \leq X \leq 12$$

$$\text{Formule 3 :} \quad -1000 \leq A \leq 1500.$$

**2.** Bandage pneumatique selon la revendication 1, dans lequel un poids moléculaire moyen en nombre du segment mou est compris entre 500 et 12000.

**3.** Bandage pneumatique selon les revendications 1 ou 2, dans lequel A dans la formule 1 satisfait la formule 4 ci-dessous :

$$\text{Formule 4 :} \quad -750 \leq A \leq 1250.$$

**4.** Bandage pneumatique selon l'une quelconque des revendications 1 à 3, dans lequel A dans la formule 1 satisfait la formule 5 ci-dessous :

$$\text{Formule 5 :} \quad -500 \leq A \leq 1000.$$

**5.** Bandage pneumatique selon l'une quelconque des revendications 1 à 4, dans lequel une teneur du segment dur dans l'élastomère thermoplastique représente entre 5 % en poids à 95 % en poids par rapport à la quantité totale de l'élastomère thermoplastique.

**6.** Bandage pneumatique selon l'une quelconque des revendications 1 à 5, dans lequel un rapport entre le poids moléculaire moyen en nombre du segment dur et un poids moléculaire moyen en nombre du segment mou dans l'élastomère thermoplastique est compris dans un intervalle allant de 45/55 à 90/100.

**7.** Bandage pneumatique selon l'une quelconque des revendications 1 à 6, dans lequel une teneur de l'élastomère thermoplastique en matériau de résine représente entre 55 % en poids et 100 % en poids par rapport à la quantité

totale du matériau de résine.

**8.** Bandage pneumatique selon l'une quelconque des revendications 1 à 7, dans lequel un point de fusion de l'élastomère thermoplastique est compris entre 160 °C et 250 °C.

**9.** Bandage pneumatique selon l'une quelconque des revendications 1 à 8, dans lequel le matériau de résine comprend en outre un élastomère thermoplastique autre que l'élastomère thermoplastique incluant le segment mou et le segment dur.

**10.** Bandage pneumatique selon l'une quelconque des revendications 1 à 9, dans lequel une épaisseur d'une partie latérale du cadre du bandage pneumatique est comprise entre 1 mm et 10 mm.

**11.** Bandage pneumatique selon l'une quelconque des revendications 1 à 10, dans lequel un module d'élasticité en traction du matériau de résine est compris entre 100 MPa et 1000 MPa.

**12.** Bandage pneumatique selon l'une quelconque des revendications 1 à 11, dans lequel une résistance à la traction à la limite d'élasticité du matériau de résine est comprise entre 5 MPa et 20 MPa.

**13.** Bandage pneumatique selon l'une quelconque des revendications 1 à 12, dans lequel un allongement en traction à la limite d'élasticité du matériau de résine est compris entre 10 % et 70 %.

**14.** Bandage pneumatique selon l'une quelconque des revendications 1 à 13, dans lequel un allongement en traction par rupture du matériau de résine représente 50 % ou plus.

FIG.1A

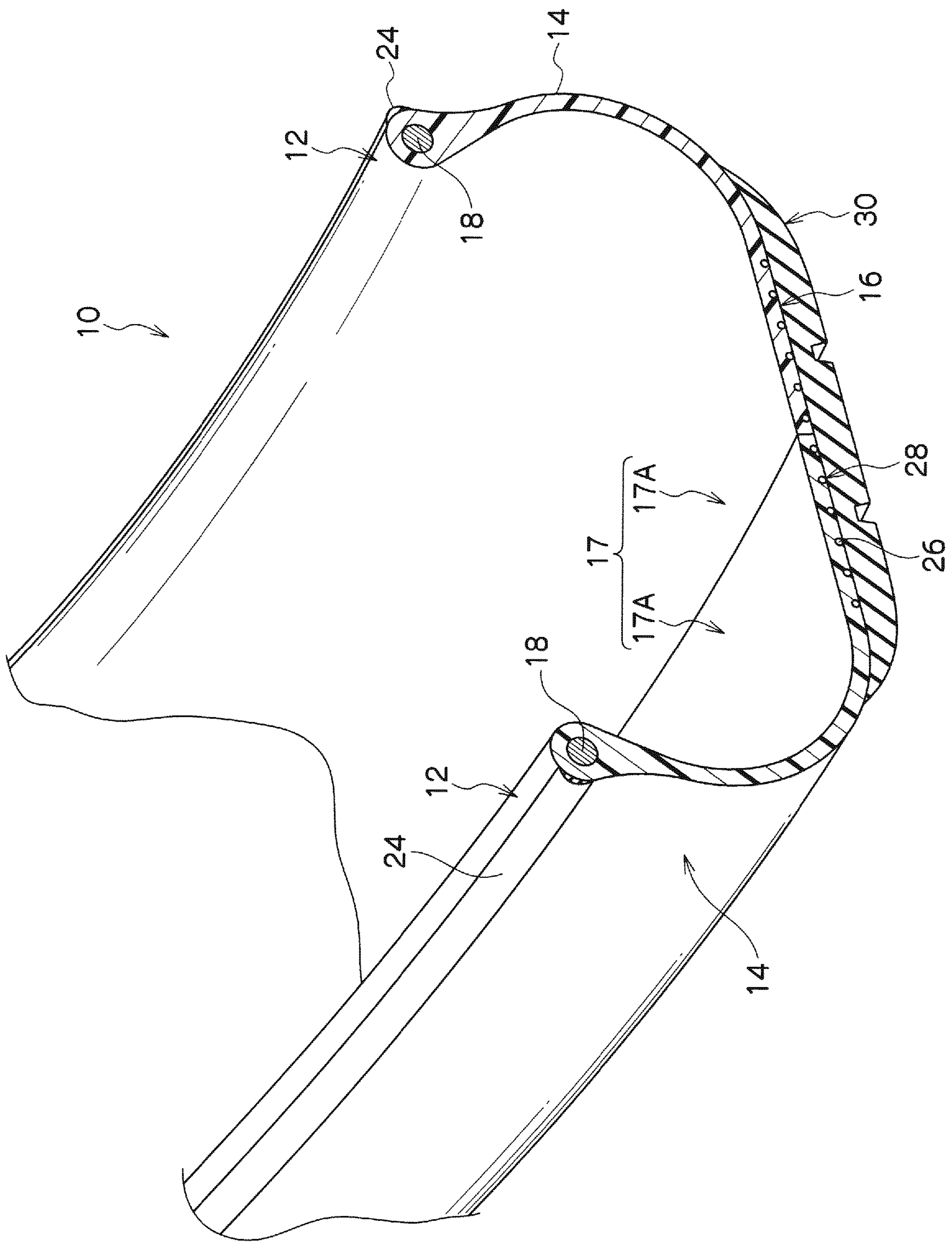

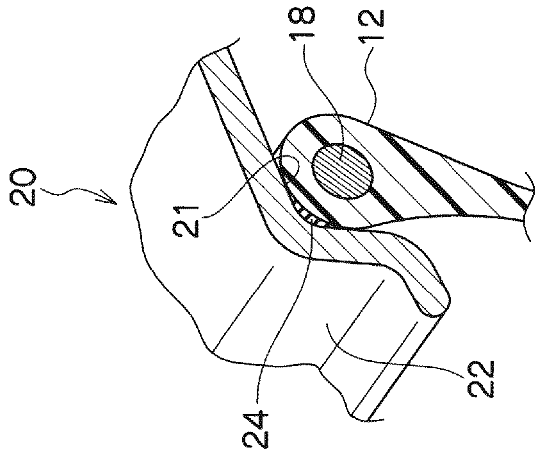


FIG.1B

FIG.2

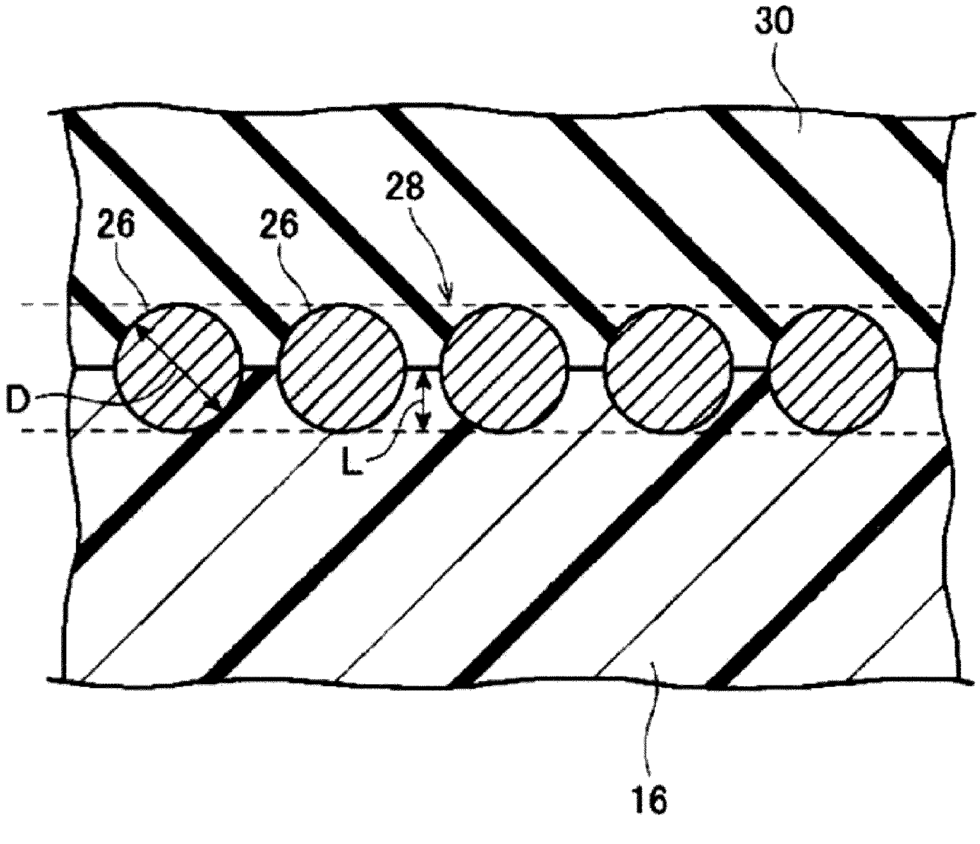

FIG.3

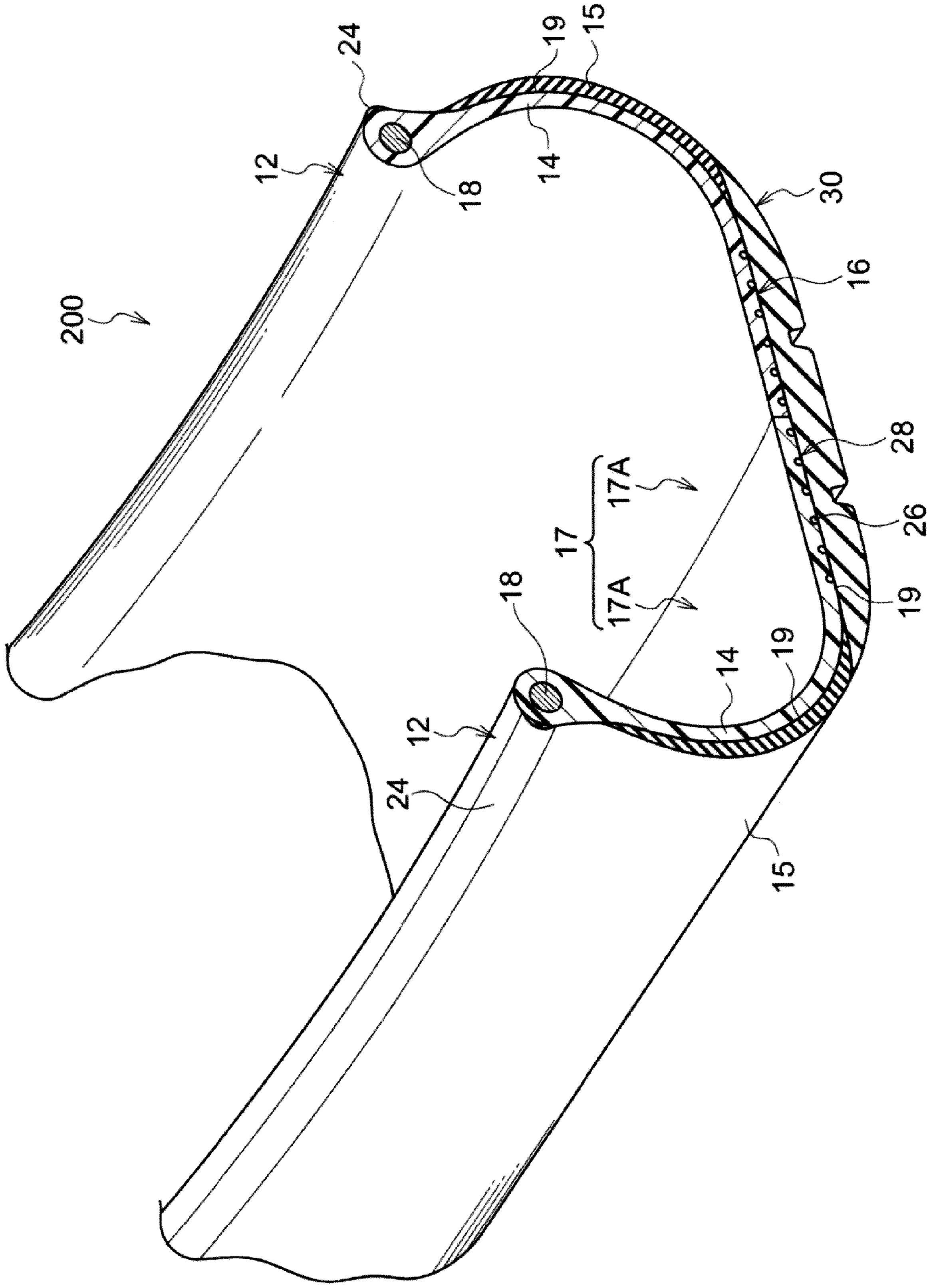

FIG.4

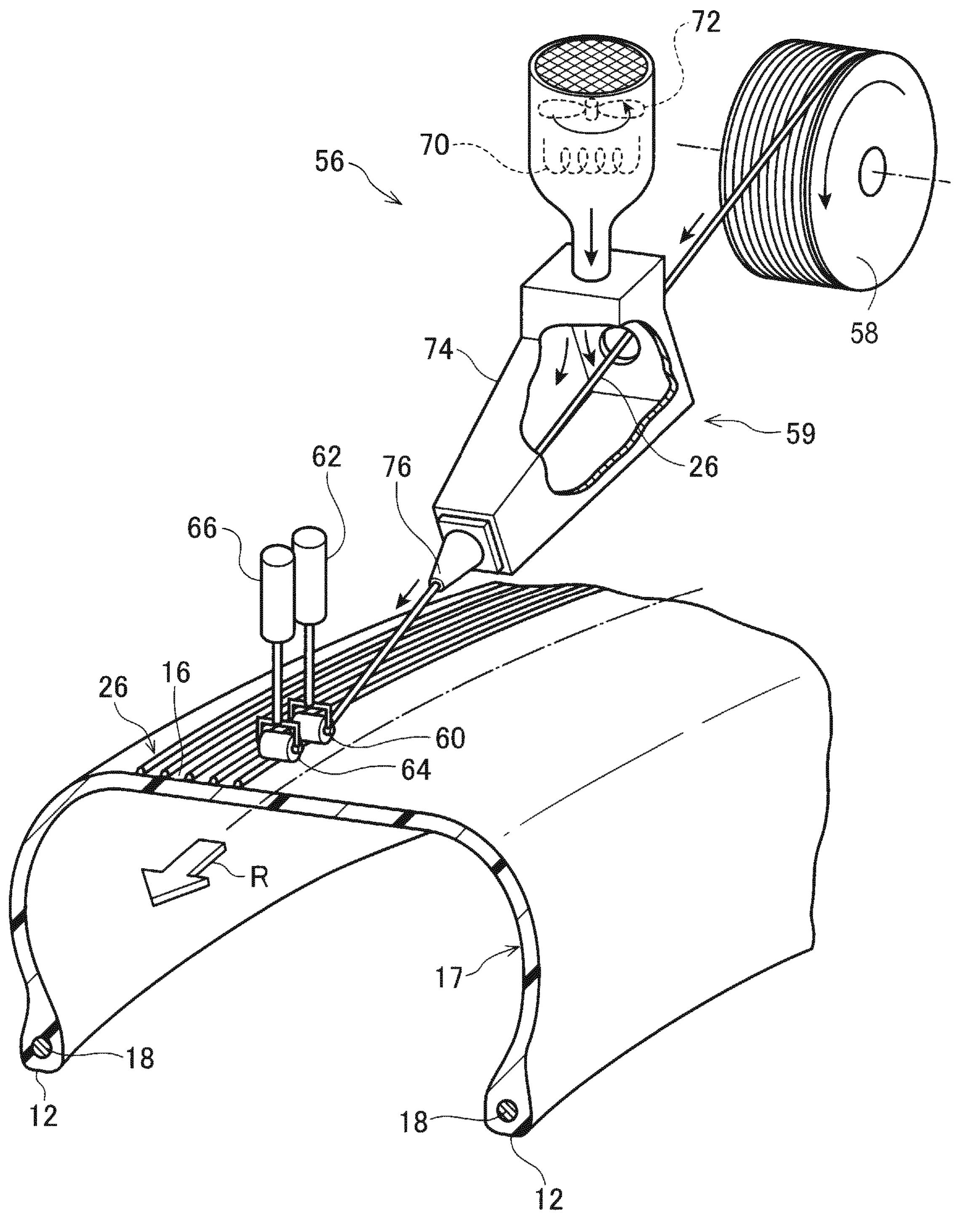

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2610071 A1
- JP 2012045790 A

### Non-patent literature cited in the description

- JATMA YEAR BOOK. Japan Automobile Tyre Manufacturers Association (JATMA)
- JATMA YEAR BOOK. Japan Automobile Tyre Manufacturers Association, Inc, 2009
- JATMA YEAR BOOK. Japan Automobile Tyre Manufacturers Association, Inc,